(19) Europäisches Patentamt
European Patent Office
Office européen des brevets

(11) EP 1 236 239 B1

(12) **EUROPÄISCHE PATENTSCHRIFT**

(45) Veröffentlichungstag und Bekanntmachung des Hinweises auf die Patenterteilung:
**20.08.2014 Patentblatt 2014/34**

(21) Anmeldenummer: **00972802.3**

(22) Anmeldetag: **18.10.2000**

(51) Int Cl.:
***H01M 4/13*** *(2010.01)* ***H01M 4/131*** *(2010.01)*
***H01M 4/133*** *(2010.01)* ***H01M 4/139*** *(2010.01)*
***H01M 4/485*** *(2010.01)* ***H01M 4/02*** *(2006.01)*
***H01M 4/1391*** *(2010.01)* ***H01M 4/1393*** *(2010.01)*
***H01M 4/505*** *(2010.01)* ***H01M 4/525*** *(2010.01)*
***H01M 4/587*** *(2010.01)* ***H01M 4/62*** *(2006.01)*
***H01M 10/052*** *(2010.01)* ***H01M 10/058*** *(2010.01)*
***H01M 10/0562*** *(2010.01)*

(86) Internationale Anmeldenummer:
**PCT/EP2000/010270**

(87) Internationale Veröffentlichungsnummer:
**WO 2001/041246 (07.06.2001 Gazette 2001/23)**

(54) **FOLIEN FÜR ELEKTROCHEMISCHE BAUELEMENTE SOWIE VERFAHREN ZU DEREN HERSTELLUNG**

FILMS FOR ELECTROCHEMICAL COMPONENTS AND A METHOD FOR PRODUCTION THEREOF

FEUILLES POUR COMPOSANTS ELECTROCHIMIQUES ET LEUR PROCEDE DE PRODUCTION

(84) Benannte Vertragsstaaten:
**AT BE CH CY DE DK ES FI FR GB GR IE IT LI LU MC NL PT SE**

(30) Priorität: **29.11.1999 DE 19957285**

(43) Veröffentlichungstag der Anmeldung:
**04.09.2002 Patentblatt 2002/36**

(73) Patentinhaber: **Fraunhofer-Gesellschaft zur Förderung der angewandten Forschung e.V.**
**80686 München (DE)**

(72) Erfinder:
- **BIRKE, Peter**
**73479 Ellwangen Jagst (DE)**
- **BIRKE-SALAM, Fatima**
**73479 Ellwangen Jagst (DE)**

(74) Vertreter: **Olgemöller, Luitgard Maria et al**
**Patentanwältin**
**Lindenstraße 12a**
**81545 München (DE)**

(56) Entgegenhaltungen:
**EP-A- 0 557 250** **WO-A-00/13249**
**WO-A-00/24068** **WO-A-00/63984**
**WO-A-98/18173** **WO-A-98/26468**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 1 236 239 B1

## Beschreibung

Die vorliegende Erfindung betrifft neuartige ionenleitende Materialien, und zwar insbesondere Folien, die sich als Festkörperelektrolyt in Schichtverbünden mit elektrochemischen Eigenschaften für die Herstellung von Batterien und Akkumulatoren eignen, und zwar insbesondere auch für wiederaufladbare Systeme in Folientechnologie, die nachstehend auch als Zellen oder ganz allgemein als "Systeme" oder als elektrochemisch aktive bzw. elektrochemisch aktivierbare Schichtverbünde bezeichnet werden. Diese Systeme sollen unter anderem auch solche umfassen, die im angelsächsischen Sprachraum mit *primary* und *secondary batteries, systems* und *cells* bezeichnet werden.

Seit Beginn der siebziger Jahre hat man versucht, elektrochemische Bauelemente wie Akkumulatoren oder dergleichen in Form dünner Schichten zu erzeugen. Ziel ist es, Folienverbünde zu erhalten, die einerseits so flexibel sind, daß man sie beispielsweise aufrollen oder einer anderen gewünschten Form anpassen kann, und die andererseits durch eine extrem hohe Kontaktfläche zwischen den einzelnen elektrochemischen Bestandteilen wie Elektroden und Elektrolyten, bezogen auf das eingesetzte Volumen an elektrochemisch aktivem Material, besonders günstige Lade- und Entladeeigenschaften aufweisen. Diese Bauweise (Folientechnologie) sollte mit wenigen Ausnahmen wesentliche Vorteile bieten. Nicht anwenden wird man sie meist nur dann nicht, wenn (a) extreme Anforderungen an das System zu stellen sind oder (b) besondere elektrochemische Vorteile vorliegen.

In der Patentliteratur ist eine Reihe von Verfahren zum Herstellen solcher Folien beschrieben. Bezüglich derjenigen Folien, die als Elektrolytschicht in daraus herzustellenden Bauelementen vorgesehen sind, gibt es zwei unterschiedliche Ansätze.

Beim ersten wird eine Paste aus allen wesentlichen Bestandteilen hergestellt. Diese Paste dient sodann als Ausgangsmaterial für die Folie. Zur Pastenherstellung wird ein Festelektrolyt im Pastenmaterial gelöst; durch Extraktion des Lösungsmittels wird dann eine be- bzw. vernetzende dünne Schicht dieses Elektrolyten in der Folie abgeschieden. Im US-Patent 5,009,970 wird Polyethylenoxid (PEO) als Polymer eingesetzt, das mit einem geeigneten Lithiumsalz in Wasser versetzt wird, wodurch ein Komplex aus den beiden Bestandteilen gebildet wird. Durch Bestrahlen wird das PEO vernetzt. Man erhält ein Hydrogel, das anschließend im Vakuum getrocknet werden soll. Das US Patent 5,041,346 beschreibt ebenfalls eine oxymethylenvernetzte Variante eines Ethylenoxid-Polymerelektrolyten, in der zusätzlich ein Weichmacher enthalten ist. Allerdings ist berichtet worden, daß die Ionenleitfähigkeit solcher Komplexe im Vergleich zu reinem festem Lithiumsalz zwar drastisch erhöht ist, für den Einsatz als Elektrolytschicht in elektrochemischen Bauelementen jedoch nicht ausreicht. Zwar bewirkt man mit diesem Verfahren die homogenste Abscheidung; man erkauft diese jedoch mit einer mechanischen Instabilität der gebildeten Folie (Reißen, Aufrollen, Kleben). Ferner ist von Nachteil, daß die löslichen Lithiumleiter, die in dieser Technologie eingesetzt werden, hygroskopisch, teilweise sogar hydrolyseempfindlich sind. Wasser wird überdies nicht nur adsorbiert, sondern in der Regel als Kristallwasser eingelagert. Neben einer stark erschwerten Lagerfähigkeit der so erzeugten Folien (die in Trockenräumen erfolgen muß) sind die Folien praktisch nicht ohne Dampfblasen laminierbar, da das Wasser wegen der festen Bindung an diese Substanzen mit konventionellen Methoden nicht extrahierbar ist. Dekontaktierungen, Löcher bis hin zu kleinen Explosionskratern und ein Zerfließen des Laminates sind in der Regel das Ergebnis, weshalb dieses Verfahren vorteilhaft nur auf Pasten anwendbar ist.

Die zweite Strategie sieht die Schaffung einer feinporigen Schwammstruktur von. So beschreibt die US 5.456.000 wiederaufladbare Batteriezellen, die durch Laminierung von Elektroden- und Elektrolytzellen aus selbsttragenden Folien erzeugt werden. Als positive Elektrode wird ein Film oder eine Membran eingesetzt, die getrennt aus $LiMn_2O_4$-Pulver in einer Matrix-Lösung aus einem Copolymeren hergestellt und anschließend getrocknet wurde. Die negative Elektrode besteht aus einer getrockneten Beschichtung einer pulverisierten Kohlenstoff-Dispersion in einer Matrix-Lösung eines Copolymeren. Zwischen den Elektrodenschichten wird eine Elektrolyt/Separatormembran angeordnet. Hierfür wird ein Poly(vinylidenfluorid)-Hexafluorpropylen-Copolymeres in Aceton oder THF oder dgl. mit einem Plastifizierer umgesetzt, der sich als Lösungsmittel für Elektrolytsalze eignet. Die aus diesen Bestandteilen erzeugten Filme werden laminiert. Um die Batterie zu aktivieren, wird sie in die entsprechende Elektrolytlösung eingetaucht, wobei sie sich mit der Elektrolytlösung vollsaugt.

Der hohe Anteil an Plastifizierer bewirkt, daß die Folien eine sehr schlechte Alterungsbeständigkeit aufweisen; nach Lagerzeiten von mehreren Wochen werden Konsistenzänderungen und Brüchigkeit bis zum Zerfall zu Pulver beobachtet, was möglicherweise aufgrund einer Interaktion mit der Umgebungsfeuchte beruht. Außerdem kann die Lamination der Folien aufgrund des hohen Plastifizierer-Anteils nur bei einer gegenüber dem Schmelzpunkt des Polymers stark erniedrigten Temperatur erfolgen. In der als bevorzugt beschriebenen Variante wird daher das Plastifiziermittel zuvor ausgetrieben, was durch aufwendige Waschschritte erfolgen muß. Außerdem wird die Aufnahmefähigkeit für den Elektrolyten verringert, da durch die Lamination der gewaschenen Folien ein großer Teil der Poren verkleinert bzw. verschlossen wird. Man wäscht daher ganz besonders bevorzugt die Zelle erst nach Lamination. Durch den Waschschritt entstehen aber Spannungen und Dekontaktierungen in einer mit diesen Folien hergestellten Zelle; die mechanische Stabilität ist stark beeinträchtigt. Auch beobachtet man elektrochemische Zersetzungen, wenn die Zelle später aktiviert wird. Ein weiterer Nachteil ist der durch die Porenstruktur entstandene direkte Kontakt des sodann eingefüllten Flüssigelektrolyten mit den Kontaktnetzen, bei denen es sich in der Regel um Aluminium auf der positiven Seite und Kupfer auf der negativen Seite handelt. Es kann hierdurch in der Folge zu Zersetzungen des Elektrolyten zwischen zwei Metallen ohne Referenz kommen.

Weder ist es also vorteilhaft, den Elektrolyten wie bisher vorgeschlagen homogen in das organischen Pastenmaterial einzuarbeiten, das für die Folienherstellung vorgesehen ist, noch, einen hohen Verporungsgrad der Folien vorzusehen, der durch - in der Regel mehrfaches - Herauswaschen von Plastifizierer bewirkt werden muß.

In der Patentliteratur sind eine Reihe elektrochemisch aktivierbarer, anorganischer Materialen beschrieben, die Ionenleitfähigkeit zeigen und als Elektrolyt in elektrochemischen Bauelementen Verwendung finden. Während WO 00/24068 A elektrochemisch aktivierbare, flüssige anorganische Elektrolytmaterialien betrifft, offenbaren die Druckschriften WO 00/13249 A und WO 00/63984 A Festkörper-Tapes (Elektroden- und Elektrolytfolien), die festes, in der Matrix nicht lösliches anorganisches Elektroden- und Elektrolytmaterial in einer organischen Polymermatrix enthalten, wobei WO 00/63984 A spezifische nanokristalline Materialien beschreibt. Beide Druckschriften erwähnen die Möglichkeit, zur Herstellung einer Elektrode zusätzlich pulverförmige Zusatzstoffe wie Graphit oder amorphen Kohlenstoff einzuarbeiten, um spezifische Eigenschaften wie die mechanische Flexibilität sowie die elektronische Leitfähigkeit zu verbessern, wobei dieser Zusatz in WO 00/63984 A zwingend im Lösungsmittel löslich sein muss.

WO 98/18173 A beschreibt eine als "Festelektrolyt" bezeichnete Schicht, die aus einer Polymermatrix, einem Solvens, einem anorganischen Salz und einem Verfestigungsmittel besteht, wobei das Salz in dem Solvens löslich sein muss. Das Verfestigungsmittel kann Aluminiumoxid, Siliciumdioxid oder ein Zeolith sein und hat die Aufgabe, den Festelektrolyten stabiler zu machen, seine Anbindung an die Anode und die Kathode zu verbessern sowie möglicherweise vorhandenes Wasser zu entfernen. EP 0 557 250 A betrifft Polymerelektrolyt-Komposite aus Komplexverbindungen, die aus polymeren Lithiumsalzen gebildet sind, worunter eine Kombination von Polyethylenoxid und Lithiumperchlorat zu verstehen ist, und einen keramischen Zusatz, z.B. kristallinen Zeolith, enthalten, wobei der keramische Zusatz heterogen in die ionische, homogene Matrix eingebettet ist.

WO 98/26468 A nennt eine Elektrolytfolie bestehend aus einer Polymermatrix, einem lithiierten Zeolithen, der die strukturellen Eigenschaften der Elektrolytschicht verbessert, und einem Flüssigelektrolyten, dem als Salze verschiedene Lithiumverbindungen dienen, wobei die Ionenleitung ausschließlich über die Phase des flüssigen Elektrolyten erfolgt. Wahlweise kann Füllmittel zugeführt sein, beispielsweise abgerauchtes Siliciumdioxid, welches den Aktivierungsprozess der Batterie beschleunigt, indem ein schnelles und vollständiges Füllen der Poren mit Elektrolyt-Lösung in einer entsprechenden Folie bewirkt wird.

DE 198 19 752 A1 offenbart eine als "Festelektrolyt und/oder Separator" bezeichnete Zusammensetzung bestehend aus einem als anorganischer Feststoff gekennzeichneten Pigment sowie einem organischen Vernetzersystem. Um in diesem Festkörper Ionenleitung zu bewirken, müssen eine als "Leitsalz" bezeichnete Verbindung, die dissoziierbare Lithiumkationen enthält, und ggf. weitere Zusatzstoffe, wie organische Lösungsmittel, als Elektrolyt inkorporiert werden. Das Pigment kann unter einer sehr großen Anzahl verschiedener Materialien ausgewählt sein, darunter Li-Ionen leitenden Feststoffen.

**Aufgabe** der vorliegenden Erfindung ist die Bereitstellung von Festkörperelektrolyt enthaltenden Folien mit verbesserten Eigenschaften, aus denen sich elektrochemische Bauelemente in Form dünner Schichtverbünde herstellen lassen. Die so hergestellten Schichtverbünde sollen die genannten Nachteile des Standes der Technik nicht aufweisen.

Um diese Aufgabe zu lösen, wird vorgeschlagen, die Folien weder aus einer Paste mit homogenen Bestandteilen, d.h. im Polymermaterial löslichen elektrochemisch aktivierbaren Materialien, herzustellen, noch, elektrochemisch aktive Folienverbünde mit einem hohen Verporungsgrad bereitzustellen, deren Ionenleitung ausschließlich mit Hilfe einer Flüssigkeit erfolgt. Vielmehr sollen in elektrochemischen Bauelementen verwendbare, selbsttragende oder auf einem Substrat aufliegende, als Elektrolytschicht geeignete Schichten und Folienverbünde bereitgestellt werden, die aus pastösen Massen herstellbar sind und eine heterogene Mischung aus einer mindestens ein organisches Polymer, dessen Vorstufen oder dessen Präpolymere und gegebenenfalls einen Plastifizierer enthaltenden oder hieraus bestehenden Matrix (A) und einem elektrochemisch aktivierbaren, in der Matrix nicht löslichen, anorganischen Material in Form einer Festsubstanz (B) umfassen, welche sich als Festkörperelektrolyt eignet. Die Schichten enthalten zusätzlich einen zweiten Elektrolyten, der in gelöster Form in die Schicht eingebracht ist. Die Schichten oder Folien können für die Herstellung von elektrochemisch aktiven Schichtverbünden verwendet werden.

Der Ausdruck "in elektrochemischen Bauelementen verwendbar" impliziert dabei, daß das elektrochemisch aktivierbare anorganische Material in Form einer Festsubstanz ein ionenleitendes Material sein muss, das sich als Festelektrolyt eignet.

Da die Folien aus heterogenen Pastenmischungen hergestellt sind, ist der die Kinetik bestimmende Parameter für die chemische Diffusion, also für den Atomtransport in und aus dem aktiven Material einer negativen und positiven Elektrode, die Körnchengröße im $\mu$m-Bereich und nicht die um mindestens zwei Größenordnungen höhere Foliendicke. Denn die chemische Diffusion wird mathematisch durch den Diffusionskoeffizienten

$$\tilde{D} = \frac{L^2}{2t} \qquad (1)$$

beschrieben. Darin sind L die Diffusionslänge und t die Diffusionszeit. Löst man diese Formel nach der Zeit t auf, so erhält man

$$t = \frac{L^2}{2\tilde{D}} \qquad (2)$$

Die Diffusionszeit entscheidet über schnelle Elektrodenkinetik und -relaxation und somit über die maximal mögliche Stromentnahme und Lebensdauer (hohe Polarisationen schädigen das Wirtsgitter der Elektroden) eines Akkus oder anderen elektrochemischen Bauelements. Man kann die Zeit einmal durch die Geometrie, also die effektive Diffusionslänge, oder durch den Diffusionskoeffizienten, also durch verschiedene Elektrodenmaterialien, beeinflussen, da der Diffusionskoeffizient selbst eine elektrochemische Materialeigenschaft ist. Da Elektrodenmaterialien zum einen Kapazitäts-, Umwelt- und Kostenanforderungen erfüllen sollten und zum anderen für die gewünschte volumetrische und gravimetrische Leistungsdichte des elektrischen Bauelements (z.B. des Akkus) verantwortlich sind, ist fast immer der Weg der einfachere, die Diffusionslänge zu reduzieren.

Im Falle - vorliegend nicht beanspruchter - Elektrodenmaterialien gilt folgendes: Man kann elektrochemisch aktive Pulver (Material (B)) möglichst kleiner Körnchengröße verwenden. Dabei wird vorausgesetzt, dass diese in einer gemischtleitenden, also ionen- und elektronenleitenden Matrix eingebettet sind, wobei sowohl Ionen- als auch Elektronenleitung in dieser Matrix so schnell sein müssen, daß sie nicht ausbremsend wirken, also das Kriterium

$$\tilde{D}_{\text{Matrix}} >> \tilde{D}_{\text{Elektrodenmaterial}} \qquad (3)$$

erfüllt ist, da die Matrix die tatsächliche Geometrie der Zelle bestimmt. Da die chemische Diffusion also ein gemischter und gleichzeitiger Transport von Ionen und Elektronen ist, wird, will man den Vorteil der kleinen Diffusionslänge im $\mu$m-Bereich des Elektrodenmaterials ausnutzen, der schnelle Transport beider Spezies über die Matrix essentiell.

Die leitfähigsten Metalle besitzen eine Leitfähigkeit $\sigma$ von $10^6$ S/cm, es folgen unmittelbar spezielle Modifikationen des Kohlenstoffs; die höchsten ionischen Leitfähigkeiten werden in Salzschmelzen oder konz. $H_2SO_4$ mit $10^0$-$10^1$ S/cm erreicht. Die besten organischen Lithiumionenleiter liegen in der Größenordnung von $10^{-2}$ S/cm, letztere werden in Lithiumzellen eingesetzt. Generell läßt sich also

$$\sigma_{\text{ionisch}} << \sigma_{\text{elektronisch}}$$

festhalten. Während durch den Zusatz von Hochleitfähigkeitsrußen leicht die Anforderung an die elektronische Leitfähigkeit zu erfüllen ist, muss ein Elektrolyt feinst- und bestverteilt in der Folie vorliegen, um den Leitfähigkeitsnachteil über die Geometrie einer großen Oberfläche zu kompensieren. Vorzugsweise wird daher der zur Herstellung der erfindungsgemäßen Elektrolytschicht vorgesehenen pastösen Masse ein Material (C) zugesetzt, das zwar bevorzugt weitgehend elektrochemisch inert ist, das aber eine Transport- und/oder Speicherwirkung und/oder Quellwirkung für einen flüssigen Elektrolyten besitzt.

Die aus den Pasten erzeugte Elektrolytfolie kann mit Folien für negative und positive Elektroden zu einem Folienverbund laminiert werden, der dann mit der Lösung eines-zweiten - Elektrolyten imprägniert werden kann, oder die Elektrolytfolie wird separat bereits vor Herstellung des Schichtverbundes mit der Lösung des zweiten Elektrolyten befüllt. Dabei wird das Material (C), wenn vorhanden, vorzugsweise nicht nur den Pasten zugesetzt, die für die Herstellung von Elektrolytfolie vorgesehen sind, sondern auch solchen, aus denen Elektrodenfolien gefertigt werden sollen, um die Haltefähigkeit und Beweglichkeit des Elektrolyten auch in den Elektroden zu sichern.

Die beigefügten Figuren erläutern die vorliegende Erfindung, wobei Figur 1 das Zykelverhalten (11.-22. Zyklus) einer Zelle zeigt, deren Elektrolytfolie gemäß Beispiel 2 hergestellt wurde, während die Figuren 2a und 2b jeweils eine Ausschnittsvergrößerung des Zyklus Nr. 12 zeigen.

Das Material (C) kann in beliebiger Weise unter all denjenigen Substanzen und deren Mischungen ausgewählt

werden, die aufgrund ihrer Struktur bzw. im Zusammenwirken mit der Matrix (A) durch Kapillarwirkung oder dergleichen die Saugfähigkeit der aus einer Paste hergestellten Schichten für eine Elektrolytlösung erhöhen. So können beispielsweise Materialien ausgewählt werden, die aufgrund ihrer porösen Struktur, ihrer hohen spezifischen Oberfläche oder ihrer starken Quellfähigkeit starke Kapillarkräfte für die aufzunehmende Elektrolytlösung entwickeln. Dabei ist es möglich, dass das Material (C) ionische Leitfähigkeitseigenschaften aufweist, die für die Elektrochemie der Schichten bzw. der elektrochemischen Bauelemente eine Rolle spielen

Beispiele für Substanzen, die als Material (C) eingesetzt werden können, sind Bimsmehl, Zeolithe, Schamott oder Silicagel, abgerauchtes Siliciumdioxid (z.B. Cab-osil von Fluka) oder Kieselgur. Zwar ist für einen Teil solcher Stoffe auch bereits vorgeschlagen worden, sie als Stütz- oder Füllmittel zu verwenden. Jedoch war dies nie im Zusammenhang mit einer Folie bzw. einem Folienverbund der Fall, die bzw. der weiterhin mit einem Elektrolyten befüllt werden soll.

Das Material (C) kann günstigerweise in einer Menge von etwa 0,05-50 Gew.-%, vorzugsweise in einer Menge von etwa 2 bis 10 Gew.-%, bezogen auf die Gesamtheit der Bestandteile des Pastenmaterials, in die für die Schicht vorgesehene pastöse Masse eingearbeitet werden.

In einer speziellen Ausgestaltung der Erfindung besitzt das elektrochemisch aktive bzw. aktivierbare Material (B) selbst ebenfalls eine derartige Aufnahme- und Haltekapazität für den Elektrolyten. Ein Material, das diese Eigenschaft aufweist, ist natürlicher Spodumen mit einer Körnung von $\leq 75\mu m$, bevorzugt $\leq 40\mu m$, besonders bevorzugt $\leq 1\mu m$ als Elektrolytmaterial. Dieses Material lässt sich in hervorragender Weise mit den übrigen Bestandteilen der Matrix (A) zu einer mechanisch stabilen Folie verarbeiten; es nimmt auch leicht eine Elektrolytlösung auf. In Extremfällen kann dadurch auf die Beigabe von Material (C) ganz verzichtet werden.

Eine Masse zur Herstellung der erfindungsgemäßen Schicht erhält ihre pastöse Konsistenz durch die Verwendung einer geeigneten Matrix (A). Der Ausdruck "pastös" soll dabei bedeuten, daß die Masse nach ihrer Herstellung mit Hilfe von gängigen Pastenauftragsverfahren verarbeitbar ist, beispielsweise kalandriert, extrudiert, gegossen, aufgestrichen, aufgespachtelt, aufgerakelt oder mit diversen Druckverfahren auf einem Untergrund aufgebracht werden kann, wobei vor allem, aber nicht ausschließlich selbsttragende Schichten erzeugt werden sollen. Je nach Bedarf kann die Masse dabei relativ dünnflüssig bis sehr zäh gehalten werden.

Für die Matrix (A) kann eine Vielzahl von Materialien verwendet werden. Dabei kann man mit lösungsmittelfreien oder lösungsmittelhaltigen Systemen arbeiten. Als lösungsmittelfreie Systeme eignen sich beispielsweise vernetzbare, flüssige oder pastöse Harzsysteme. Beispiele hierfür sind Harze aus vernetzbaren Additionspolymeren oder Kondensationsharzen. So können beispielsweise Vorkondensate von Phenoplasten (Novolake) oder Aminoplasten eingesetzt werden, die nach Ausformen der pastösen Masse zur Schicht eines elektrochemischen Schichtverbundes endvernetzt werden. Weitere Beispiele sind ungesättigte, beispielsweise durch Pfropf-Copolymerisation mit Styrol vernetzbare Polyester, durch bifunktionelle Reaktionspartner härtbare Epoxiharze (Beispiel: Bisphenol-A-Epoxiharz, kalt gehärtet mit Polyamid), vernetzbare Polycarbonate wie durch ein Polyol vernetzbares Polyisocyanurat, oder binäres Polymethylmethacrylat, das ebenfalls mit Styrol polymerisiert werden kann. Die pastöse Masse wird dabei jeweils aus dem mehr oder weniger zähflüssigen Vorkondensat bzw. unvernetzten Polymer und dem Plastifizierer als Matrix (A) oder unter Verwendung wesentlicher Bestandteile davon, zusammen mit der Komponente (B), gebildet.

Eine andere Möglichkeit ist die Verwendung von Polymeren oder Polymer-Vorstufen zusammen mit einem Lösungs- oder Quellmittel für das organische Polymer. Im Prinzip besteht hier keine Beschränkung bezüglich der einsetzbaren synthetischen oder natürlichen Polymere. Nicht nur Polymere mit Kohlenstoff-Hauptkette sind möglich, sondern auch Polymere mit Heteroionen in der Hauptkette wie Polyamide, Polyester, Proteine oder Polysaccharide. Die Polymere können Homo- oder Copolymere sein; die Copolymere können statistische Copolymere, Pfropfcopolymere, Blockcopolymere oder Polyblends sein; eine Beschränkung ist hier nicht gegeben. Als Polymere mit reiner Kohlenstoff-Hauptkette sind beispielsweise natürliche oder synthetische Kautschuke verwendbar. Besonders bevorzugt sind halogenierte, z.B. fluorierte KohlenwasserstoffPolymere wie Teflon, Polyvinylidenfluorid (PVDF), Polyvinylidenchlorid oder Polyvinylchlorid, da hiermit bei den aus der pastösen Masse gebildeten Folien oder Schichten besonders gute wasserabweisende Eigenschaften erzielt werden können. Dies verleiht den damit erzeugten elektrochemischen Bauelementen eine besonders gute Langzeitstabilität. Weitere Beispiele sind Polystyrol oder Polyurethan. Als besonders bevorzugte Beispiele für Copolymere seien Copolymere von Teflon und amorphem Fluorpolymer sowie Polyvinylidenfluorid/Hexafluorpropylen (im Handel als Kynarflex erhältlich) genannt. Weiterhin bevorzugt sind auch andere quellfähige Polymere wie Polyethylenoxid. Als Beispiele für Polymere mit Heteroatomen in der Hauptkette seien Polyamide vom Diamin-Dicarbonsäure-Typ oder vom Aminosäure-Typ, Polycarbonate, Polyacetale, Polyether und Acrylharze genannt. Weitere Materialien umfassen natürliche und synthetische Polysacharide (Homo- und Heteroglykane), Proteoglykane, beispielsweise Stärke, Cellulose, Methylcellulose. Auch Substanzen wie Chondroitinsulfat, Hyaluronsäure, Chitin, natürliche oder synthetische Wachse und viele andere Substanzen können eingesetzt werden. Zusätzlich können auch die vorgenannten Harze (Präkondensate) in Lösungs- bzw. Verdünnungsmitteln verwendet werden.

Die vorgenannten Substanzen werden in geeigneter Weise in einer Menge von 0,05 bis 50 Gew.-%, bevorzugt in einer Menge von 2 bis 30 Gew.-%, bezogen auf die Gesamtmenge des Pastenmaterials, in dieses eingearbeitet. Dabei ist eine Menge von ≤ 10 Gew.-% häufig ausreichend.

Lösungs- bzw. Quellmittel für die vorgenannten Polymere sind dem Fachmann bekannt.

Ein optionaler Bestandteil der Matrix (A) ist ein Plastifiziermittel (auch als Weichmacher bezeichnet) für das bzw. die eingesetzten Polymere. Unter "Plastifizierer" oder "Weichmacher" sollen hier Substanzen verstanden werden, deren Moleküle durch Nebenvalenzen (Van-der-Waals-Kräfte) an die Kunststoffmoleküle gebunden werden und die dadurch die Wechselwirkungskräfte zwischen den Makromolekülen verringern und damit die Erweichungstemperatur und die Sprödigkeit und Härte der Kunststoffe herabsetzen. Damit soll hier auch eine Reihe von Substanzen mit umfaßt sein, die üblicherweise als Quellmittel bezeichnet werden. Das Einarbeiten eines Plastifizierers im erfindungsgemäßen Sinn bewirkt eine hohe mechanische Flexibilität der aus der pastösen Masse erzeugbaren Schicht.

Erfindungsgemäß ist das elektrochemisch aktivierbare Material (B) der Schicht nicht im Plastifizierer (und selbstverständlich auch nicht im gegebenenfalls eingesetzten Lösungs- oder Quellmittel für das Polymere) löslich.

Besonders bevorzugt ist es, als Plastifizierer Substanzen und Mischungen von Substanzen auszuwählen, die die Gruppierung

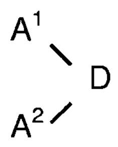

tragen, wobei $A^1$ und $A^2$ unabhängig voneinander $R^1$, $OR^1$, $SR^1$ oder $NHR^1$ bedeuten oder $A^1$ und $A^2$ mit D zusammen einen Hetero-5-Ring ausbilden und D C=O, S=O, C=NH oder $C=CH_2$ bedeuten kann und außerdem dann, wenn D mit $A^1$ und $A^2$ den genannten Hetero-5-Ring bildet, auch O, S, NH oder $CH_2$ bedeuten kann. $R^1$ stellt einen $C_1$-$C_6$-Alkylrest (gerad- oder verzweigtkettig, ggf. auch cyclisch) dar. Bevorzugt ist $R^1$ gleich Methyl, Ethyl, n- oder iso-Propyl, n- oder iso-Butyl.

Unter die vorstehend genannten Kriterien fallen vor allem Carbonate bzw. Ester und deren Schwefel- und Amino-Analoga. Besonders als Plastizifierer bevorzugte Substanzen sind Dimethylsulfoxid, Dimethylcarbonat, Ethylmethylcarbonat, Diethylcarbonat, Methylpropylcarbonat, Ethylencarbonat, Ethylensulfit, N-N'-Ethylenharnstoff, Propylencarbonat, Dioxolan, Tetrahydrofuran und Butyrolacton.

Der Plastifizierer in der erfindungsgemäßen Zusammensetzung besitzt einen direkten Einfluß auf Konsistenz, Homogenität und Flexibilität der Folie. Besonders bevorzugt sind dabei Substanzen mit einer asymmetrischen Ringstruktur; bei einer symmetrischen Ringstruktur werden ebenfalls sehr gut Ergebnisse erzielt, die nur äußerst geringfügig ersterer Gruppe nachstehen. Ohne geschlossenen Ring fällt das Ergebnis etwas zurück, möglicherweise wegen einer höheren Flüchtigkeit. Besonders überraschend sind die Lagerfähigkeit und die Flexibilität des Materials auch bei sehr geringem Plastifiziereranteil deutlich verbessert. Diese Eigenschaften sind umso verblüffender, als viele Substanzen, die unter die Definition des erfindungsgemäß einzusetzenden Plastifizierers fallen, bisher eher als Quellmittel bekannt waren.

Es ist bevorzugt, daß der Plastifizierer in einer nicht zu großen Menge eingesetzt wird. Brauchbar können 0,05-50 Gew.-%, sein, bevorzugt sind bis zu 12 Gew.-%, stärker bevorzugt etwa 10 Gew.-% oder darunter und ganz besonders bevorzugt nicht mehr als etwa 5 Gew.-% in der Matrix vorhanden, wobei die Menge auf die Menge des elektrochemisch aktivierbaren Materials bezogen ist. Empfehlenswert ist es dabei, die Menge an Plastifizierer immer so gering wie für das jeweilige System möglich zu halten. Wenn es wünschenswert ist, aus verarbeitungstechnischen Überlegungen heraus eine relativ große Menge in die pastöse Masse einzuarbeiten, kann ein Teil des Plastifizierers anschließend (z.B. nach Ausformen der Folie) wieder entfernt werden, beispielsweise durch Vakuumextraktion bei z.B. bis zu $10^{-2}$ mbar, ggf. bei erhöhter Temperatur (bis etwa 150°C, vorzugsweise bei 65-80°C). Alternativ kann die Extraktion bei Umgebungsdruck durch Trocknen und Erwärmen bei vorzugsweise 120°C, ggf. auch bis zu 200 °C, erfolgen.

Ein Vorteil geringer Plastifizierermengen ist unter anderem die Verminderung des Wassereintransportes in die Folien (Plastifizierer sind meist hygroskopisch), das ggf. dort verbleiben und eingeschlossen werden kann. Es resultiert erfindungsgemäß ein extrem geringer Wassereinschluß bei der Fertigung, und die so hergestellten Folien lassen sich leicht und elegant nach Standardmethoden trocknen.

Aus den pastösen Massen werden erfindungsgemäß dünne Schichten, z.B. Folien, erzeugt, aus denen Dünnfilm-Batterien und andere entsprechende elektrochemische Bauelemente hergestellt werden können. Die einzelnen Schichten oder Folien dieser Elemente werden auch "Tapes" genannt. Diese oder die hieraus durch geeignetes Aufeinander-Aufbringen der entsprechenden elektrochemisch aktiven bzw. aktivierbaren Schichten können dann wie erwähnt anschließend in eine geeignete Elektrolyt-Lösung eingetaucht werden.

Die vorliegende Erfindung umfasst daher die erfindungsgemäßen selbsttragenden oder auf einem Substrat aufliegenden Schichten oder Folien bevorzugt in den angegebenen Dicken. Die Schichten sind vorzugsweise flexibel.

Die Folien erhalten ihre Konsistenz über die oben näher beschriebene Matrix (A), die aus stützenden Polymeren wie voranstehend beschrieben, die gegebenenfalls (und vorzugsweise) in einem Lösungsmittel wie Aceton löslich sind,

sowie ggf. einem oder mehreren Plastifizierer(n) (Weichmacher(n)) wie oben beschrieben besteht. Weiterhin enthalten sie ein pulverförmiges, in der Folie unlösliches Elektrolytmaterial (B). Ferner können sie erfindungsgemäß ein wie oben für pastösen Massen beschriebenes Material (C) enthalten, das in der Lage ist, den Transport und die Speicherung von Elektrolytflüssigkeit innerhalb der Folie zu verbessern. Während das gegebenenfalls für die Herstellung der Paste eingesetzte Lösungsmittel während oder nach der Verfestigung der Paste in Folienform vorzugsweise wieder entfernt wird (z.B. durch Ausgasen im Vakuum und/oder durch Wärme), verbleibt der Plastifizierer, sofern vorhanden, vorzugsweise zumindest anteilig in der entstandenen Folie. Der Verbleib des Plastifizierers trägt dazu bei, daß eine Sedimentation pulverförmiger Bestandteile während der Folienherstellung vermieden wird. Zwar besitzen viele der oben beschriebenen polymeren Zusammensetzungen (z.B. eine bevorzugte Zusammensetzung aus oder unter Verwendung wesentlicher Anteile eines Copolymeren aus Polyvinylidenfluorid/Hexafluorpropylen, (PVDF/HFP, Kynarflex)) einen nur geringen Kristallinitätsgrad, hohe Flexibilität und neigen nur wenig zum Verspröden. Eine mögliche Entmischung und Sedimentation bei der Folienherstellung läßt sich damit jedoch nicht sicher verhindern.

Zur Erzeugung sowohl der selbsttragenden Schichten (Folien, Tapes) als auch der auf einem Substrat aufliegenden Schichten kann auf die üblichen, im Stand der Technik bekannten Verfahren zurückgegriffen werden, die für die entsprechenden Polymermaterialien der Matrix anwendbar sind. Wichtige Techniken sind das sog. Tape-Casting, das sog. "reverse-roll-on-coating", Gießen, Sprayen, Pinseln oder Rollern. Die Verfestigung der pastösen Massen erfolgt dabei je nach Material beispielsweise durch Härten (von Harzen oder anderen Präkoridensaten), durch Vernetzen von Präpolymerisaten oder linearen Polymerisaten, durch Abdampfen von Lösungsmittel oder auf ähnliche Art und Weise. Um selbsttragende Folien zu erhalten, kann beispielsweise eine geeignete pastöse Masse auf Kalandern in der geeigneten Dicke ausgeformt werden. Hier kann auf Standardtechnologie verwiesen werden. Die selbsttragenden Schichten können auch durch Auftragen der pastösen Masse auf ein Substrat und Abziehen der erzeugten Schicht nach ihrer Verfestigung gebildet werden. Die Beschichtung kann mit üblichen Pastenauftragsverfahren durchgeführt werden. Beispielhaft sei hier das Aufstreichen, Aufrakeln, Aufspritzen, Spincoating und dergleichen genannt. Auch Drucktechniken sind möglich. Die Laminierung von Folien zum Verbund erfolgt bei einer geeigneten Temperatur, für das vorerwähnte System PVDF/HFP z.B. in geeigneter Weise bei 100-250°C, bevorzugt im Bereich von 135-150°C. Gegebenenfalls können Temperaturgradienten gefahren werden. Endlosfolien können dynamisch-kontinuierlich laminiert werden. Der Druck dabei beträgt bevorzugt etwa 0,5 kg/20 $cm^2$.

In einer Ausgestaltung der Erfindung werden vernetzbare Harzmassen (Präkondensate), wie weiter oben für pastösen Massen beschrieben, eingesetzt und nach Ausformen der Schicht durch UV- oder Elektronenbestrahlung ausgehärtet. Eine Härtung kann natürlich auch thermisch oder chemisch (beispielsweise durch Eintauchen der erzeugten Schicht in ein entsprechendes Bad) bewirkt werden. Gegebenenfalls werden den Massen geeignete Initiatoren oder Beschleuniger oder dgl. für die jeweilige Vernetzung zugesetzt.

Die Herstellung von für elektrochemische Bauelemente vorgesehene Folien gemäß der vorliegenden Erfindung bietet eine Reihe von Vorteilen: (a) Die Fertigung hoher Stückzahlen mit Lagerfähigkeit der Ausgangsmaterialien ist günstig (die noch nicht zum elektrochemischen Schichtverbund verbundenen Schichten lassen sich sehr sicher lagern). (b) Eine flexible und variationsreiche Formgebung ist möglich. (c) Die Folien lassen sich raumsparend lagern (z.B. durch gestapelte und/oder aufgerollte Folienbahnen). (d) Durch die Abwesenheit niedrig siedender Materialien und Einsatz fester Ionenleiter ist eine höhere Temperaturbeständigkeit gegeben. (e) Die Folien sind aufgrund des festen Aggregatzustands der elektrochemisch aktivierbaren Bestandteile auslaufsicher und korrosionsbeständig. (f) Da in bevorzugter Weise im wesentlichen gesundheitlich unbedenkliche Matrices und Plastifizierer eingesetzt werden, können nach dem Gebrauch der Binder wieder extrahiert und die Ausgangsmaterialien durch Filtrieren rückgewonnen und wiederverwertet werden.

Wie erwähnt werden nach der Herstellung der Folien diese vor oder nach Laminierung zum Folienverbund mit einem (zweiten) gelösten Elektrolyten imprägniert. Das kann beispielsweise dadurch geschehen, daß Elektrolytlösung auf die Folie oder den laminierten Folienverbund aufgesprüht, oder daß die Folie bzw. der Folienverbund in die entsprechende Lösung des Elektrolyten eingetaucht wird. Dies kann in besonders bevorzugter Weise bei solchen Folien/Folienverbünden erfolgen, aus denen ein Überschuß an Plastifizierer zuvor wie voranstehend beschrieben entfernt wurde oder bei denen bereits ursprünglich nur sehr wenig Plastifizierer eingesetzt wurde. Nach dem Befüllen der Folie oder des Folienverbundes wird dieser in vorteilhafter Weise getrocknet. Während dies üblicherweise dadurch erfolgt, daß er einige Stunden lang erwärmt, z.B. auf 70-90°C gehalten wird, ermöglicht der Zusatz des Materials (C) eine Verkürzung dieser Zeit und/oder eine Konvertierung bereits bei Raumtemperatur. Bei dieser "Konvertierung" kann sich eine sehr dünne, flexible, ionenleitende Schicht aus Umsetzungsprodukten von Polymer, Weichmacher und Elektrolyt bilden. Der Elektrolyt wird dabei infolge des beschriebenen Aufnahmeprozesses gelifiziert oder solidifiziert; das so hergestellte Tape oder die Zelle (also die Folie bzw. der Folienverbund) besitzen trotz Verwendung eines gelösten Elektrolyten eine besonders hohe Auslaufsicherheit.

Als Elektrolyte für die Elektrolytlösung eignen sich beispielsweise Salze des Lithiums gut. Besonders vorteilhaft werden $LiClO_4$, $LiNO_3$, $LiBF_4$, $LiPF_6$, $LiSO_3CF_3$, $LiC(SO_2CF_3)_3$ oder $Li(CF_3SO_2)_2N$ oder Mischungen hiervon eingesetzt. Auch explosive Substanzen wie die voranstehend erwähnten Perchlorat- oder Nitratsalze können aufgrund der Gelifizierung bzw. Solidifizierung eingesetzt werden, ohne daß es beim Laden auch mit hohen Strömen zu einer Explosion kommen könnte, da durch die erfindungsgemäße Aufnahme und Bindung des Flüssigelektrolyten ein explosionssicheres System (Zelle) geschaffen wird. Als Lösungsmittel werden bevorzugt Plastifizierer wie voranstehend als optionaler Bestandteil der Matrix (A) definiert eingesetzt, darunter bevorzugt solche mit Gruppierung $A^1$-D-$A^2$ wie ebenfalls voranstehend definiert, allein oder in Mischung. Der gewählte Plastifizierer bzw. die gewählte Plastifiziermischung sollte bei der Verarbeitungstemperatur flüssig sein.

In einer bevorzugten Ausgestaltung der Erfindung umfaßt das Lösungsmittel für den Elektrolyten eine Substanz mit guten Quelleigenschaften. Dabei kann es sich z.B. um einen der vorgenannten Plastifizierer handeln, sofern dieser solche Eigenschaften aufweist, z.B. Propylencarbonat. Besonders bevorzugt ist eine solche Substanz in einer Menge von 2 bis 10 Gew.-%, stärker bevorzugt von ca. 5 Gew.-%, bezogen auf das gesamte Lösungsmittel für den Elektrolyten, enthalten. Wird zuviel einer solchen Substanz zugesetzt oder werden insgesamt zu stark quellend wirkende Plastifizierer als Lösungsmittel für den Elektrolyten eingesetzt, so verursacht die zu starke Quellung zunächst Dekontaktierungen innerhalb der Zelle, die dann bis zum völligen Aufweichen und einer Zersetzung der Zelle führen kann. Dagegen bewirkt der Quelleffekt bei nur mäßigem Quellen, daß der ionische Kontakt innerhalb der Folien sowie der Folien untereinander verbessert wird, indem kleine Kavitäten, die z.B. beim Trocknen der Folien durch das Austreiben des Lösungsmittels entstehen können, verschlossen werden.

In einer weiteren, speziellen Ausgestaltung der Erfindung enthält die Folienmatrix (A) einen Plastifizierer, und die für die Imprägnierung vorgesehene Elektrolytflüssigkeit besteht aus oder enthält Elektrolyt, der ebenfalls in Plastifizierer gelöst ist. Dabei kann derselbe, ein anderer oder teilweise ein anderer Plastifizierer in der Matrix (A) vorhanden sein bzw. als Lösungsmittel für den Elektrolyten dienen. Bevorzugt wird die Menge des in der Folie vorhandenen Plastifizierers - durch entsprechende Mengenzusätze bei der Herstellung der zugrundeliegenden pastösen Masse oder durch späteres Herauslösen eines Teils davon wie voranstehend beschrieben - so gewählt, daß die Folie mit Plastifizierer nicht, insbesondere bei weitem nicht, gesättigt ist. Dies hat zur Folge, daß bei der Imprägnierung mit der Elektrolytlösung der Plastifizierer über den vorhandenen Konzentrationsgradienten in die Folie gelangt, wobei er hierbei als Vehikel für die Aufnahme des löslichen Elektrolytmaterials dient. In Extremfällen kann der gesamte Elektrolyt auf diesem Wege in die Folie eingeschleust werden, so daß es eines Materials (C) wie voranstehend definiert in der Folie gar nicht bedarf.

Die erfindungsgemäßen Folien sind in ihrer Dicke nicht im besonderen beschränkt; der Fachmann wird die der Anwendung gemäße Dicke jeweils entsprechend auswählen. Geeignet sind beispielsweise Dicken von etwa 10 µm, stärker bevorzugt von etwa 50 µm, bis etwa 1 bis 2 mm und gegebenenfalls auch darüber (z.B. bis ca. 10 mm, wobei derartige Folien auch vorgesehen sein können, um kleindimensionierte Formen daraus auszustanzen, z.B. für Batterien und Akkumulatoren zur Verwendung in der Medizin wie Hörgerätebatterien). Folien zur Herstellung von elektrochemischen Bauelementen in der sogenannten "Dickschicht-Technologie" weisen bevorzugt eine Dicke im Bereich von etwa 50 µm bis 500 µm, ganz besonders bevorzugt im Bereich von etwa 100-200 µm auf. Es ist erfindungsgemäß allerdings auch möglich, entsprechende Dünnschicht-Bauelemente herzustellen (dieser Begriff umfaßt Dicken von vorzugsweise 100 nm bis zu einigen µm). Diese Anwendung dürfte aber beschränkt sein, da entsprechende Bauelemente den gängigen Kapazitätsanforderungen in einer Vielzahl von Fällen nicht genügen dürften. Denkbar ist allerdings die Anwendung beispielsweise für Backup-Chips.

Die vorliegende Erfindung betrifft weiterhin Schichtverbünde mit elektrochemischen Eigenschaften, wie insbesondere wiederaufladbare Akkumulatoren und andere Batterien, die durch eine entsprechende Abfolge der obengenannten Schichten gebildet werden oder diese umfassen.

Für die Herstellung von Schichtverbünden können die einzelnen pastösen Massen Lage für Lage aufeinander mittels Pastenauftragsverfahren aufgebracht werden. Dabei kann entweder jede einzelne Lage für sich vernetzt oder von Lösungsmittel befreit oder auf sonstige Weise in die Schichtform gebracht werden; es kann aber auch eine Verfestigung der einzelnen Matrices durch Vernetzung oder Abdampfen des Lösungs- oder Quellmittels oder dergleichen nach Beendigung des Auftragens aller benötigten Schichten vorgenommen werden. Letzteres ist beispielsweise dann vorteilhaft, wenn die einzelnen elektrochemisch aktivierbaren Schichten mit einem Druckverfahren aufgetragen werden, das analog zu einem Vielfarbendruck erfolgt. Als Beispiel hierfür sei die Flexodruck-Technik erwähnt, mit deren Hilfe kontinuierlich mehrere Meter/Sekunde eines Substrats mit den erforderlichen elektrochemisch aktivierbaren Schichten bedruckt werden können.

Alternativ kann jede Schicht oder Folie einzeln in ihren endverfestigten Zustand überführt werden. Handelt es sich um selbsttragende Folien, so können die entsprechenden Bestandteile des zu bildenden Bauelementes getrennt z.B. als gerollte Folien aufbewahrt und anschließend durch Laminierung miteinander verbunden werden. Hierfür können konventionelle Laminiertechniken eingesetzt werden. Genannt sei hier beispielsweise das Extrusionsbeschichten, wobei die zweite Schicht durch Anpreßwalzen mit einer Trägerschicht verbunden wird, Kalanderbeschichten mit zwei oder drei Walzspalten, worin neben der pastösen Masse die Trägerbahn mit einläuft, oder Doublieren (Verbinden unter Druck und Gegendruck von bevorzugt erhitzten Walzen). Der Fachmann wird die entsprechenden Techniken ohne weiteres auffinden, die sich durch die Wahl der Matrices für die jeweiligen pastösen Massen ergeben oder anbieten.

Die vorliegend beschriebenen pastösen Massen und die daraus hergestellten erfindungsgemäßen Folien oder

Schichten eignen sich, wie bereits erwähnt, für eine Vielzahl elektrochemischer Bauelemente. Der Fachmann kann hierfür dieselben Festsubstanzen (B) auswählen, die er für klassische elektrochemische Bauelemente, d.h. solche ohne den Zusatz von Kunststoffen, verwenden würde.

Insbesondere für Lithiumsysteme, die die höchsten praktischen volumetrischen sowie gravimetrischen Energiedichten liefern können, ist man aufgrund der Notwendigkeit der Schaffung großer Kontaktoberflächen zur Kompensation der gegenüber wäßrigen Systemen um drei Größenordnungen geringeren ionischen Leitfähigkeit auf Folien angewiesen. Märkte mit hohen Stückzahlen in Millionen wie der 3C-Markt fordern ein Endlosherstellungsverfahren über Folien von der Rolle, da sonst die benötigten Taktzeiten unerreichbar werden.

Nachstehend soll beispielhaft eine Reihe derartiger Lithiumsysteme genannt werden:

- untere Ableitelektrode Al, Cu, Pt, Au, C
- positive Elektrode alle möglichen Kombinationen und multinären Verbindungen von Lithiumcobalt-Lithiumnickel- und Lithiummanganoxiden, ggf. substituiert mit Magnesium, Aluminium oder Fluor
- Elektrolyt $Li_{1,3}Al_{0,3}Ti_{1,7}(PO_4)_3$, $LiTaO_3 \cdot SrTiO_3$, $LiTi_2(PO_4)_3 \cdot Li_2O$, $Li_4SiO_4 \cdot Li_3PO_4$,
- Negative Elektrode Kohlenstoff (in beliebiger Modifikation), $TiO_2$, $TiS_2$ $WO_2$, $MoO_2$ Lithiumtitanat, ein lithiumlegierbares Metall, Oxid, Iodid, Sulfid oder Nitrid, ein lithiumlegierbarer Halbleiter und heterogene Mischungen hiervon
- obere Ableitelektrode Al, Cu, Mo, W, Ti, V, Cr, Ni

Anwendungsbeispiele sind Lithiumzellen, Lithiumpolymerzellen, Lithiumplastikzellen, Lithiumfestkörperzellen oder Lithiumionenzellen.

Die vorliegende Erfindung ist aber selbstverständlich nicht auf Akkumulatoren in Lithiumtechnologie beschränkt, sondern umfaßt, wie bereits oben erwähnt, alle diejenigen Systeme, die sich auch mit "konventioneller" Technik, d.h. ohne Einarbeiten einer organischen Polymermatrix, herstellen lassen.

Nachstehend sollen einige spezielle Ausgestaltungen der erfindungsgemäßen Elektrolytschichten beschrieben werden. Soweit die darin eingesetzten elektrochemisch aktivierbaren Bestandteile noch nicht Stand der Technik sind, sollte klar sein, daß diese Substanzen auch in "Bulk-Form", d.h. ohne Polymermatrix, in entsprechenden elektrochemischen Bauelementen eingesetzt werden können.

Durch geeignete Wahl der elektrochemisch aktiven Substanzen lassen sich elektrochemische Bauelemente, beispielsweise Akkumulatoren herstellen, die in den Lade-/Entladekurven Charakteristika aufweisen, mittels derer eine gezielte Kontrolle von Be- und Entladezustand des Akkumulators möglich ist. So können als elektrochemisch aktivierbare Festsubstanz (B) für die positive oder die negative Elektrode Mischungen zweier der voranstehend erwähnten Elektrodenmaterialien oder entsprechender anderer Elektrodenmaterialien eingesetzt werden, die unterschiedliche Oxidations-/Reduktionsstufen besitzen. Eine der beiden Substanzen kann alternativ durch Kohlenstoff ersetzt sein. Dies führt zu charakteristischen Verläufen der Be- und Entladekurven, die eine vorteilhafte Detektion des Be- bzw. Entladezustandes eines unter Verwendung solcher Massen hergestellten Akkumulators ermöglichen. Die Kurven weisen dabei zwei verschiedene Plateaus auf. Wird das dem Entladezustand nähere Plateau erreicht, kann dieser Zustand dem Benutzer angezeigt werden, so daß er weiß, daß er bald eine Wiederaufladung vornehmen muß, und vice versa.

Wird in eine für eine negative Elektrode vorgesehene pastöse Masse Kohlenstoff und ein mit Lithium legierbares Element eingearbeitet, so verleiht dies der daraus herstellbaren Elektrode (mit Eigenschaften einer Legierungs- und einer Interkalationselektrode) eine besonders hohe Kapazität bei verbesserter elektrochemischer Stabilität. Außerdem ist die Volumenausdehnung geringer als bei einer reinen Legierungselektrode.

Überraschenderweise hat sich gezeigt, dass die Einarbeitung eines Phasengemischs aus $Li_4SiO_4 \cdot Li_3PO_4$ in eine pastöse Masse unabhängig von deren vorgesehenem elektrochemischem Verwendungszweck, zu einer Verbesserung der Plastizität der daraus erzeugten Elektroden oder Festelektrolyte führt. Voraussetzung hierfür ist, daß das Phasengemisch äußerst fein gemahlen ist. Die extrem geringen Korngrößen dürften die Ursache für eine verbesserte innere Gleitwirkung sein.

Die als Festkörperelektrolyt geeignete Festsubstanz (B) kann aus einem Lithiumionenleiter und einem oder mehreren weiteren Ionenleitern (Li, Cu, Ag, Mg, F, Cl, H) bestehen. Hiermit hergestellte Elektrolyt-Schichten weisen besonders günstige elektrochemische Eigenschaften wie Kapazität, Energiedichte, mechanische und elektrochemische Stabilität auf.

Die vorstehend beschriebenen Bestandteile, aus denen die erfindungsgemäße Schicht hergestellt wird, können auf konventionelle Art und Weise vermischt werden, vorzugsweise durch heftiges Rühren oder Verkneten der Bestandteile. Bevorzugt werden das organische Polymer oder seine Vorstufen mit dem Plastifizierer in einem Lösungs- oder Quellmittel vorgelöst oder vorgequollen, bevor die Komponente (B) zugegeben wird.

Durch das Einbetten der Festsubstanzen (B) in die Matrix (A) entfällt das Sintern der Pulver der elektrochemisch aktivierbaren Substanzen bei hohen Temperaturen, wie es für "konventionelle" elektrochemische Bauelemente üblich ist. Ein solches Sintern würde keine pastöse Konsistenz der Ausgangssubstanzen liefern.

Die elektrochemischen Bauteile, die mit den erfindungsgemäßen pastösen Massen herstellbar sind, sind nicht beschränkt. Die nachstehend beschriebenen Ausgestaltungen sind daher nur als Beispiele oder besonders bevorzugte Ausgestaltungen zu verstehen.

So können wiederaufladbare elektrochemische Zellen in Dickschichttechnologie hergestellt werden, d.h. mit einzelnen, elektrochemisch aktivierbaren Schichten in einer Dicke von etwa 10 $\mu$m bis etwa 1 bis 2 mm und bevorzugt von etwa 100-200 $\mu$m. Wenn die elektrochemische Zelle auf der Lithiumtechnologie basieren soll, bieten sich als Festsubstanzen für die Elektrolytschichten diejenigen Substanzen an, die bereits voranstehend hierfür aufgezählt sind. Dabei sind mindestens drei Schichten vorzusehen, nämlich eine solche, die als positive Elektrode fungiert, eine, die als Festkörperelektrolyt fungiert, und eine, die als negative Elektrode fungiert.

Erfindungsgemäß hat sich herausgestellt, daß besonders vorteilhafte Stromdichten im Akkumulator erzielt werden, wenn gewisse Grenzbedingungen eingehalten werden. Die Stromdichte läßt sich bekanntlich durch den Widerstand des Elektrolyten einstellen. Ist sie zu hoch gewählt, so können die Elektroden durch Polarisation langfristig zerstört werden; ist sie zu niedrig, so ist die Leistung des hergestellten Akkumulators nur für wenige Einsatzgebiete ausreichend. Die genannte Grenzbedingung liegt vorzugsweise bei 1 mA/cm$^2$. Wenn beispielsweise ein Elektrolyt eine Leitfähigkeit von $10^{-4}$ S/cm besitzt, so ist es besonders vorteilhaft, wenn die Elektrolytschicht etwa 100 $\mu$m dick ist. Eine Stromdichte von 1 mA/cm$^2$ ruft dann nämlich einen durch den Widerstand bedingten Spannungsabfall von vernachlässigbaren 0,1 V hervor. Wenn die Leitfähigkeit des Elektrolyten dagegen beispielsweise $10^{-5}$ S/cm beträgt, kann die Dicke der Elektrolytschicht auf etwa 10 $\mu$m gesenkt werden. Es ist daher empfehlenswert, die Schichtdicke d im Verhältnis zur Leitfähigkeit $\sigma_{ion}$ und einem ionischen Widerstand ($\Omega$) und in Bezug auf die Fläche A so zu wählen, daß die folgende Formel erfüllt wird:

$$200\ \Omega < d/(\sigma_{ion} \cdot A).$$

Die genannte dreischichtige Zelle (oder jedes beliebige andere elektrochemische Bauelement, bestehend aus positiver Elektrode/Elektrolyt/negativer Elektrode) kann zusätzlich mit Ableitelektroden versehen sein. Diese bestehen zweckmäßigerweise aus Folien der geeigneten Materialien (Materialien für Ableitelektroden, die in der Lithiumtechnologie verwendet werden können, sind weiter vorne beschrieben).

In einer speziellen Ausgestaltung der Erfindung wird zwischen die untere Ableitelektrode und die ihr benachbarte Elektrode sowie die obere Ableitelektrode und die ihr benachbarte Elektrode eine weitere dünne Kunststoffschicht ("Zwischentape") eingearbeitet, die ebenfalls mit Hilfe einer pastösen Masse der vorliegenden Erfindung hergestellt sein kann. Diese dünne Kunststoffschicht sollte leitende und/oder metallische Elemente oder Legierungen aus solchen Elementen enthalten, die geeignet sind, Elektronen vom jeweiligen Elektrodenmaterial auf die jeweilige Ableitelektrode zu transportieren. Beispiele hierfür sind die Elemente Gold, Platin, Rhodium und Kohlenstoff oder Legierungen aus diesen Elementen, wenn die Kunststoffschicht zwischen positiver Elektrode und zugehöriger Ableitelektrode angeordnet werden soll. Wenn sie zwischen negativer Elektrode und Ableitelektrode angeordnet werden soll, sind als Elemente Nickel, Eisen, Chrom, Titan, Molybdän, Wolfram, Vanadium, Mangan, Niob, Tantal, Kobalt oder Kohlenstoff zu nennen. Für die Konzentration und den Aufbau der pastösen Massen, aus denen diese Schichten gebildet werden, gilt das voranstehend für die Elektroden und Elektrolyte Gesagte selbstverständlich ebenfalls.

Elektrochemische Bauelemente, in denen die Schichten der vorliegenden Erfindung verwendet werden können, können beispielsweise in einem kunststoffbasierten Gehäuse, vorzugsweise einer kunststoffbeschichteten Aluminiumfolie, versiegelt werden. Gegenüber Metallgehäusen wird hier das Gewicht vorteilhaft verringert; Vorteile ergeben sich weiterhin für die Energiedichte.

Ein elektrochemischer Schichtverbund (ein elektrochemisches Bauelement) kann auch zwischen zwei oder mehr Folien aus einem mit Wachs oder Paraffin beschichteten Kunststoff eingebettet werden. Diese Materialien wirken als Versiegelung und können zusätzlich aufgrund ihrer inhärenten Eigenschaften mechanischen Druck auf den Schichtverbund ausüben, wodurch in vorteilhafter Weise eine Kontaktverbesserung im Schichtverbund durch Preßwirkung erzielt wird.

Während ein elektrochemisches Bauelement wie vorstehend oder auf andere Weise versiegelt wird, kann man das Innere mit einem vorgegebenen Wasser-/Sauerstoff-Partialdruck beaufschlagen, der eine hohe elektrochemische Stabilität bewirkt. Dies läßt sich beispielsweise durch das Versiegeln des elektrochemischen Elementes in einer solchen Umgebung mit entsprechend eingestellten und gewählten Parametern bewirken.

Die gewünschte Versiegelung kann dadurch noch verbessert werden, daß dem Folienverbund vor dem Versiegeln in bzw. mit dem jeweils vorgesehenen Material (nochmals) ein Quellmittel zugesetzt wird, beispielsweise Propylencarbonat. Hierdurch wird ein dichtes Anliegen aller Bestandteile aneinander sichergestellt, die Zelle gegen Gaseintritt versiegelt und die Migration von Flüssigkeiten in der Zelle unterbunden.

In einer anderen Ausgestaltung der vorliegenden Erfindung wird als Elektrolytschicht eine Schicht gewählt, die

aus zwei miteinander laminierten Folien unterschiedlicher Zusammensetzung besteht, die jeweils an die Elektrode angepaßt sind, mit der sie Kontakt haben. Dies wirkt sich vorteilhaft auf die Stabilität der Phasengrenzen zwischen positiver Elektrode und Elektrolyt 1 sowie negativer Elektrode und Elektrolyt 2 aus. Als konkretes Beispiel für diese Ausgestaltung sei die Verwendung von Lithiumjodid als Elektrolytmaterial der ersten Schicht und $Li_{1,3}Al_{0,3}Ti_{1,7}(PO_4)_3$ als Elektrolytmaterial der zweiten Schicht aus.

Die Schichtfolgen von elektrochemischen Bauelementen mit der erfindungsgemäßen Elektrolytschicht können in beliebiger Form angeordnet werden. Beispielsweise können die flexiblen Schichtverbünde aufgerollt werden, wodurch eine besonders vorteilhafte Geometrie für kompakte Akkumulatoren erzielt wird. Bei kleinem Bauvolumen des Akkumulators ist hier eine sehr große batterieaktive Fläche vorhanden.

Nicht-selbsttragende Schichtverbünde können auch auf festen Untergründen wie Wänden zur integrierten Energiespeicherung aufgetragen werden (selbsttragende Folienverbünde können natürlich ebenfalls aufgebracht bzw. aufgeklebt werden). Hier können große Flächen ausgenutzt werden; ein eigener Raumbedarf für die Akkumulatoren ist nicht gegeben. Ein spezielles Beispiel für eine derartige Ausgestaltung ist die Integration von Schichtverbünden für Akkumulatoren in Substrate für Solarzellen. Hierdurch können autarke Energieversorgungseinheiten geschaffen werden. Schichtsequenzen für Akkumulatoren können auch auf feste oder flexible Substrate aufgebracht werden, um in elektronischen Aufbauten der integrierten Energiespeicherung zu dienen.

Nachstehend sollen konkrete Beispiele die Erfindung näher erläutern:

Beispiel 1 (nicht selbständig erfindungsgemäß)

1.1 Eine Batteriefolie (negative Elektrode) für eine wiederaufladbare Lithiumzelle wird hergestellt, indem 6 g hochkristalliner Graphit (Timcal SLM 44), 1,5 g Acetylenruß (Batteriequalität), 0,6 g Ethylencarbonat, 1,5 g Polyvinylidenfluorid-Hexafluorpropylen in ca. 50 g Aceton mindestens 4 h entweder mit einem Magnetrührer oder einem Dissolver gerührt werden. Die Mischung wird dabei zunächst auf 100°C erhitzt, nach Erreichen dieser Temperatur auf 50°C abgekühlt und sodann bei dieser Temperatur gehalten. Nach Ende der Rührzeit wird auf Gieß- bzw. Rakelfähigkeit eingedickt, und die Folie wird mit einer Tape-Casting Anlage ausgezogen. Der Rakelschlitz ist dabei so gewählt, daß nach dem Trocknen eine Foliendicke von 150-200 μm erreicht wird. Die Folie wird über Nacht bei 70°C und 1 mbar Enddruck in einem Vakuumtrockenschrank getrocknet.

1.2 Beispiel 1.1 wird wiederholt, mit der Änderung, daß anstelle von 6g Graphit und 1,5g Acetylruß 7,5g MCMB (Osaka Gas) eingesetzt werden.

Beispiel 2

2.1 Eine Batteriefolie (Elektrolyt) für eine wiederaufladbare Lithiumzelle entsteht aus 9 g fein pulverisiertem $LiAlSi_2O_6$ (Spodumen), 0,9 g Ethylencarbonat, 0,9 g Bimsmehl, 3,0 g Polyvinylidenfluorid-Hexafluorpropylen, aufbereitet in ca. 30 g Aceton wie die negative Elektrode und ausgezogen auf eine Dicke von 70-100 μm.

2.2 Weitere Batteriefolien für eine wiederaufladbare Lithiumzelle entstehen aus 9,9 g natürlichem Spodumen mit einer Körnung im Bereich von jeweils 75 μm, 40 μm oder 1 μm, 0,9 g Ethylencarbonat, 3,0 g Polyvinylidenfluorid-Hexafluorpropylen, aufbereitet in ca. 30 g Aceton wie die negative Elektrode und ausgezogen auf eine Dicke von 70-100 μm.

Beispiel 3 (nicht selbständig erfindungsgemäß)

Eine Batteriefolie (positive Elektrode) für eine wiederaufladbare Lithiumzelle entsteht aus 8 g fein pulverisiertem $LiCoO_2$ (SC 15, Merck), 1,2 g Acetylenruß (Batteriequalität), 0,8 g Ethylencarbonat, 0,3 g abgerauchtem $SiO_2$ (Cabosil, Fluka),2,0 g Polyvinylidenfluorid-Hexafluorpropylen und ca. 30 g Aceton wie die negative Elektrode.

Beispiel 4

Nach Zurechtschneiden wird je eine Folie der Beispiele 1 bis 3 zu einer kompletten Einzelzelle laminiert.

Die fertige Zelle wird in einer asymmetrisch mit Kunststoff beschichteten 60 μm dicken Aluminiumfolie teilverschweißt, die Netze werden dabei über zwei Kontaktzungen herausgeführt. Anschließend wird die Zelle mit einem

zweiten Festelektrolyten, der in einer einziehbaren Lösung zugegeben wird, aktiviert und dann dichtverschweißt.

Die nachstehende Tabelle nennt die eingesetzten Elektrolytlösungen:

| Elektrolyt | | Lösungsmittel (Gew.-%) | | |
|---|---|---|---|---|
| | | EC | DMC | PC |
| 0,66 | mol/l $LiBF_4$ | 64,7 | 33,3 | --- |
| 1 | mol/l $LiBF_4$ | 66,7 | 33,3 | --- |
| 1 | mol/l $LiBF_4$ | 63,3 | 31,7 | 5,0 |
| 0,66 | mol/l $LiClO_4$ | 66,7 | 33,3 | --- |
| 0,66 | mol/l $LiNO_3$ | 66,7 | 33,3 | --- |
| EC = Ethylencarbonat<br>DMC = Dimethylcarbonat<br>PC = Propylencarbonat | | | | |

**Figur 1** zeigt das Zykelverhalten einer Zelle, die dementsprechend aus Folien der Beispiele 1.1, 2.1 und 3 gezogen wurden. Abgebildet sind die Zyklen Nr. 11-22. Die 87 mAh Zelle wurde mit ca. C/4 (20 mA) konstant Strom geladen, dann bei 4,1 V konstant Spannung geladen, bis der Strom auf 10% gesunken ist, und dann mit ca. C/4 (20 mA) auf 3 V entladen. Hohe Zykelkonstanz und Reproduzierbarkeit konnten erreicht werden. Die in **Fig. 2a und 2b** gezeigten unterschiedlichen Ausschnittsvergrößerungen aus Zyklus Nr. 12 lassen einen äußerst geringen Spannungssprung (IR-drop) beim Umschalten von Laden auf Entladen und umgekehrt erkennen. Dies sowie die lange Zeit über 3,5 V verbleibende Entladekurve sind direkt mit einer erheblichen Erniedrigung des Innenwiderstands der Zelle korreliert.

Beispiel 5

Eine Batteriefolie für eine Primärzelle wird hergestellt, indem 9 g feines $MnO_2$ (Braunstein), 1,2 g Acetylenruß (Batteriequalität), 0,9 g Ethylencarbonat, 0,9 g Kieselgur, 3,0 g Polyvinylidenfluorid-Hexafluorpropylen in ca 30 g Aceton zusammengegeben und wie in Beispiel 1 weiterverarbeitet werden.

Beobachtungen zeigen generell, daß die elektrochemische Funktionsfähigkeit und Verarbeitbarkeit der Folien nicht durch die erfindungsgemäßen Zusätze beeinträchtigt werden.

**Patentansprüche**

**1.** Selbsttragende oder auf einem Substrat aufliegende Schicht, umfassend eine heterogene Mischung aus

(1.) einer mindestens ein organisches Polymer, dessen Vorstufen oder dessen Präpolymere enthaltenden oder aus den genannten Bestandteilen bestehenden Matrix (A), sowie
(2.) einem elektrochemisch aktivierbaren, in der Matrix und in Wasser nicht löslichen, anorganischen Material in Form einer Festsubstanz (B), das sich als Festkörperelektrolyt eignet,

**dadurch gekennzeichnet, dass** sie zusätzlich einen zweiten Elektrolyten enthält, der in gelöster Form in die Schicht eingebracht wurde.

**2.** Selbsttragende oder auf einem Substrat aufliegende Schicht nach Anspruch 1, wobei die heterogene Mischung zusätzlich ein Material (C), das eine Transport- und/oder Speicherwirkung für einen flüssigen Elektrolyten besitzt oder unter dessen Einwirkung quellen kann, umfasst.

**3.** Selbsttragende oder auf einem Substrat aufliegende Schicht nach Anspruch 1 oder 2, enthaltend Plastifizierer, der ausgewählt ist unter Substanzen der Formel

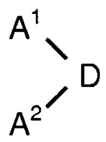

worin $A^1$ und $A^2$ unabhängig voneinander $R^1$, $OR^1$, $SR^1$ oder $NHR^1$ bedeuten oder $A^1$ und $A^2$ mit D zusammen einen Hetero-5-Ring ausbilden und D C=O, S=O, C=NH oder $C=CH_2$ bedeuten kann und außerdem dann, wenn D mit $A^1$ und $A^2$ den genannten Hetero-5-Ring bildet, auch O, S, NH oder $CH_2$ bedeuten kann.

**4.** Selbsttragende oder auf einem Substrat aufliegende Schicht nach Anspruch 3, worin der Plastifizierer ausgewählt ist unter Dimethylsulfoxid, Dimethylcarbonat, Ethylmethylcarbonat, Diethylcarbonat, Methylpropylcarbonat, Ethylencarbonat, Ethylensulfit, Propylencarbonat, Dioxolan, Tetrahydrofuran, γ-Butyrolacton oder einer Mischung hiervon.

**5.** Selbsttragende oder auf einem Substrat aufliegende Schicht nach Anspruch 3 oder 4, **dadurch gekennzeichnet, dass** der Plastifizierer in einer Menge von 0,05-50 Gew.-%, bevorzugt von 5-12 Gew.-%, ganz besonders bevorzugt von etwa 10 Gew.-% oder darunter vorhanden ist, bezogen auf das elektrochemisch aktivierbare Material.

**6.** Selbsttragende oder auf einem Substrat aufliegende Schicht nach einem der voranstehenden Ansprüche, **dadurch gekennzeichnet, dass** das organische Polymer der Matrix (A) ein quellfähiges und/oder chloriertes oder fluoriertes Polymer, vorzugsweise Polyvinylidenchlorid, Polyethylenoxid oder ein Polyvinylidenfluorid-Hexafluorpropylen-Copolymeres oder eine mindestens eines dieser Polymere enthaltende Mischung ist.

**7.** Selbsttragende oder auf einem Substrat aufliegende Schicht nach Anspruch 2 oder einem davon abhängigen Anspruch, **dadurch gekennzeichnet, dass** das Material (C) ausgewählt ist unter Bimsmehl, Zeolithen, Schamott, Silicagel, abgerauchtem Siliciumdioxid oder Kieselgur.

**8.** Selbsttragende oder auf einem Substrat aufliegende Schicht nach einem der voranstehenden Ansprüche, **dadurch gekennzeichnet, dass** als zweiter Elektrolyt mindestens ein Lithium-Salz, vorzugsweise ausgewählt unter Perchlorat, Nitrat, Tetrafluoroborat, Hexafluorophosphat, Trifluormethylsulfonat, Tris-(trifluormethylsulfonyl)methyl oder Bis(trifluormethylsulfonyl)amid, eingesetzt wird.

**9.** Selbsttragende oder auf einem Substrat aufliegende Schicht nach einem der voranstehenden Ansprüche, worin das Lösungsmittel für den Elektrolyten ausgewählt ist unter Lösungsmitteln, die auf die Matrix (A) plastifizierend wirken.

**10.** Selbsttragende oder auf einem Substrat aufliegende Schicht nach einem der voranstehenden Ansprüche, **dadurch gekennzeichnet, dass** der zweite Elektrolyt in einem Plastifizierer gelöst aufgrund eines Konzentrationsgradienten an Plastifizierer in die Schicht eingebracht wurde.

**11.** Selbsttragende oder auf einem Substrat aufliegende Schicht nach einem der voranstehenden Ansprüche, **dadurch gekennzeichnet, dass** die Schicht eine flexible Folie ist.

**12.** Verwendung einer Schicht gemäß einem der Ansprüche 1 bis 11 zur Herstellung eines Schichtverbundes mit elektrochemischen Eigenschaften, umfassend

(1.) eine Schicht, die sich als positive Elektrode eignet,
(2.) eine Schicht gemäß einem der Ansprüche 1 bis 11, und
(3.) eine Schicht, die sich als negative Elektrode eignet.

**13.** Verwendung wie in Anspruch 12 definiert, **dadurch gekennzeichnet, dass** die jeweils für eine Schicht vorgesehene heterogene Mischung in die Form einer selbsttragenden Schicht gebracht wird, dass die so entstandenen Schichten anschließend laminiert werden und der resultierende Schichtverbund anschließend mit einem gelösten Festelektrolyten derart in Kontakt gebracht wird, dass dieser in den Schichtverbund eindringt, worauf der Schichtverbund bei einer Temperatur im Bereich von Raumtemperatur bis etwa 70-90°C getrocknet wird.

**14.** Verwendung einer Schicht gemäß einem der Ansprüche 1 bis 11 zur Herstellung oder in einer wiederaufladbaren,

elektrochemischen Zelle in Dickschichttechnologie, umfassend einen Schichtverbund mit elektrochemischen Eigenschaften, umfassend

(1.) eine Schicht, die sich als positive Elektrode eignet,
(2.) eine Schicht gemäß einem der Ansprüche 1 bis 11, und
(3.) eine Schicht, die sich als negative Elektrode eignet.

**15.** Verwendung einer Schicht gemäß einem der Ansprüche 1 bis 11 zur Herstellung oder in einer wiederaufladbaren elektrochemischen Zelle umfassend einen Schichtverbund mit elektrochemischen Eigenschaften, umfassend

(1.) eine Schicht, die sich als positive Elektrode eignet,
(2.) eine Schicht gemäß einem der Ansprüche 1 bis 11, und
(3.) eine Schicht, die sich als negative Elektrode eignet,

**dadurch gekennzeichnet, dass** das elektrochemisch aktivierbare Material für die positive Elektrode ausgewählt ist unter Lithiumcobaltoxid, Lithiumnickeloxid, Nickelmanganoxid, allein oder in Mischung oder als multinäre Verbindung und/oder substituiert mit Magnesium, Aluminium oder Fluor, und/oder worin das elektrochemisch aktivierbare Material für den Elektrolyten ausgewählt ist unter in der Natur vorkommenden Lithiumsalzen und -mineralien, bevorzugt Spodumen, β-Eukryptit und Petalit, und synthetischen Lithiumsalzen, bevorzugt solchen, die weitere Kationen, ausgewählt unter solchen der Haupt- und Nebengruppenelemente, enthalten, und/oder worin das elektrochemisch aktivierbare Material für die negative Elektrode ausgewählt ist unter einer beliebigen Kohlenstoffmodifikation, Titandioxid, Titandisulfid, Wolframdioxid, Molybdändioxid, Lithiumtitanat, einem lithiumlegierbaren Metall, Halbleitermaterialien, Oxiden, Iodiden, Sulfiden, Nitriden oder heterogenen Mischungen hiervon,
oder in dieser Zelle.

**16.** Verwendung wie in Anspruch 14 oder 15 definiert, worin die elektrochemische Zelle hergestellt wird mit Hilfe der nachfolgenden Schritte:

(a) Herstellen einer selbsttragenden oder auf einem Substrat aufliegenden, elektrochemisch aktivierbaren Schicht wie in einem der Ansprüche 1 bis 11 definiert,
(b) Laminieren geeigneter solcher Schichten zu einem elektrochemisch aktivierbaren Schichtverbund und
(c) Imprägnieren des Schichtverbundes mit der Lösung eines geeigneten Elektrolyten in einem Plastifizierer, wobei die zu imprägnierende Schicht keinen oder nur eine derart geringe Menge an Plastifizierer aufweist, dass die Elektrolytlösung zumindest teilweise aufgrund des Plastifizierer-Konzentrationsgradienten in die Schicht oder den Schichtverbund gelangt.

**17.** Verfahren zum Herstellen einer selbsttragenden oder auf einem Substrat aufliegenden, als Elektrolytschicht geeigneten Schicht zur Verwendung in elektrochemischen Bauelementen gemäß einem der Ansprüche 1 bis 11, umfassend die Schritte

(a) Herstellen einer selbsttragenden oder auf einem Substrat aufliegenden, elektrochemisch aktivierbaren Schicht durch Verfestigen einer pastösen Masse, die eine heterogene Mischung aus

(1.) einer mindestens ein organisches Polymer, dessen Vorstufen oder dessen Präpolymere enthaltenden oder aus den genannten Bestandteilen bestehenden Matrix (A),
(2.) einem in der Matrix und in Wasser nicht löslichen, anorganischen Material in Form einer Festsubstanz (B), das sich als Festkörperelektrolyt eignet, und ggf.
(3.) einem Material (C), das in der Lage ist, den Transport und die Speicherung von Elektrolytflüssigkeit in das bzw. in dem Bauelement zu verbessern,

umfasst,
(b) In-Kontakt-Bringen der getrockneten Schicht mit einem gelösten Festelektrolyten derart, dass dieser in die Schicht eindringt, worauf die Folie bei einer Temperatur im Bereich von Raumtemperatur bis etwa 70-90 °C getrocknet wird.

**18.** Verfahren nach Anspruch 17, wobei die Schicht eine flexible Folie gemäß Anspruch 11 ist, **dadurch gekennzeichnet, dass** in Schritt (a) die heterogene Mischung auf einer Unterlage in Schichtform gebracht, ausgezogen und die so erhaltene Schicht getrocknet wird, wobei die Trocknung vorzugsweise bei Unterdruck bis zu etwa $10^{-2}$ mbar und

einer Temperatur zwischen Umgebungstemperatur bis zu 150°C, besonders bevorzugt im Bereich von 65-80°C, oder bei Umgebungsdruck bei einer Temperatur von bis zu 200°C, besonders bevorzugt im Bereich von etwa 120°C, erfolgt.

**19.** Verfahren zum Herstellen einer selbsttragenden Schicht nach Anspruch 17, worin die getrocknete Schicht mit der Lösung eines geeigneten Elektrolyten in einem Plastifizierer imprägniert wird, wobei die zu imprägnierende Schicht keinen oder nur eine derart geringe Menge an Plastifizierer aufweist, dass die Elektrolytlösung zumindest teilweise aufgrund des Plastifizierer-Konzentrationsgradienten in die Schicht oder den Schichtverbund gelangt.

**20.** Verwendung eines Materials (C), das eine Transport- und/oder Speicherwirkung für einen flüssigen Elektrolyten besitzt oder unter dessen Einwirkung quellen kann, als Bestandteil einer heterogenen Mischung, die eine mindestens ein organisches Polymer, dessen Vorstufen oder dessen Präpolymere enthaltende oder aus den genannten Bestandteilen bestehende Matrix (A) und ein elektrochemisch aktivierbares, in der Matrix und in Wasser nicht lösliches, anorganisches Material in Form einer Festsubstanz (B) enthält, und zur Herstellung einer selbsttragenden oder auf einem Substrat aufliegenden Schicht wie in Anspruch 2 definiert geeignet ist.

**21.** Verwendung nach Anspruch 20, **dadurch gekennzeichnet, dass** das Material (C) ausgewählt ist unter Bimsmehl, Zeolithen, Schamott, Silicagel, abgerauchtem Siliciumdioxid oder Kieselgur, oder dass das Material (C) gleichzeitig das in der Matrix und in Wasser nicht lösliche, anorganische Material in Form einer Festsubstanz (B) oder ein Teil davon ist.

**Claims**

**1.** Self-supporting layer or layer that is placed on a substrate, comprising a heterogeneous mixture of

(1.) a matrix (A) containing or consisting of at least one organic polymer, precursor thereof or prepolymer thereof,
(2.) an electrochemically activatable inorganic material in the form of a solid substance (B), said material being suitable as a solid body electrolyte and not being soluble in said matrix and in water,

**characterized in that** the said layer additionally contains an electrolyte introduced into said layer in dissolved form.

**2.** Self-supporting layer or layer that is placed on a substrate in accordance with claim 1, wherein the heterogeneous mixture additionally contains a material (C) which is capable of improving the transport and/or the storage of a liquid electrolyte or can swell under the influence thereof.

**3.** Self-supporting layer or layer that is placed on a substrate in accordance with claim 1 or 2, containing a plasticizer, selected under substances of formula

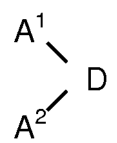

wherein $A^1$ and $A^2$ independently of each other mean $R^1$, $OR^1$, $SR^1$ or $NHR^1$ or $A^1$ and $A^2$ together with D form a 5-membered heteroring and D can be C=O, S=O, C=NH or $C=CH_2$ and further, in case D forms the said 5-membered heteroring with $A^1$ and $A^2$, it can also mean O, S, NH or $CH_2$.

**4.** Self-supporting layer or layer that is placed on a substrate in accordance with claim 3, wherein the plasticizer is selected from among dimethyl sulfoxide, dimethyl carbonate, ethyl methyl carbonate, diethyl carbonate, methyl propyl carbonate, ethylene carbonate, ethylene sulfite, propylene carbonate, dioxolane, tetrahydrofurane, γ-butyrolactone or a mixture of said substances.

**5.** Self-supporting layer or layer that is placed on a substrate in accordance with claim 3 or 4, **characterized in that** the plasticizer is present in a quantity of 0.05-50% by weight, preferably of 5-12% by weight, especially preferred of about 10% by weight or less, relative to said electrochemically activatable material.

**6.** Self-supporting layer or layer that is placed on a substrate in accordance with any of the preceding claims, **characterized in that** the organic polymer of said matrix (A) is a polymer which is capable of swelling and/or is a chlorinated or a fluorinated polymer, preferably polyvinylidene chloride, polyethylene oxide, or a polyvinylidene fluoride hexafluoropropylene copolymer, or a mixture containing at least one of said polymers.

**7.** Self-supporting layer or layer that is placed on a substrate in accordance with claim 2 or a claim depending thereon, **characterized in that** the material (C) is selected under pumice powder, zeolites, chamotte, silica gel, fumed silicon dioxide or kieselguhr.

**8.** Self-supporting layer or layer that is placed on a substrate in accordance with any of the preceding claims, **characterized in that** as the second electrolyte, at least one salt of lithium, preferably selected under perchlorate, nitrate, tetrafluoroborate, hexafluorophosphate, trifluoromethylsulfonate, tris(trifluoromethylsulfonyl)methyl or bis(trifluoromethylsulfonyl)amide, is used.

**9.** Self-supporting layer or layer that is placed on a substrate in accordance with any of the preceding claims, wherein the solvent of the liquid electrolyte is selected under solvents which are plasticizers for the matrix (A).

**10.** Self-supporting layer or layer that is placed on a substrate in accordance with any of the preceding claims, **characterized in that** the second electrolyte, dissolved in a plasticizer, has been introduced into the layer by a gradient of concentration.

**11.** Self-supporting layer or layer that is placed on a substrate in accordance with any of the preceding claims, **characterized in that** the layer is a flexible film.

**12.** Use of a layer according to any of claims 1 to 11 for the preparation of a composite layer having electrochemical properties, comprising

(1.) a layer which is suitable as a positive electrode,
(2.) a layer according to any of claims 1 to 11, and
(3.) a layer which is suitable as a negative electrode.

**13.** Use as claimed in claim 12, **characterized in that** the heterogeneous mixture provided for each of the respective layers is brought into the form of a self-supporting layer, **in that** the layers formed in this way are subsequently laminated and the resulting composite layer is subsequently contacted with a dissolved solid electrolyte in such a way that the latter penetrates into the composite layer, whereupon the composite layer is dried at a temperature in the range of room temperature up to about 70-90°C.

**14.** Use of a layer according to any of claims 1 to 11 for the preparation of or in a rechargeable electrochemical cell made in thick layer technology, comprising a composite layer having electrochemical properties, comprising

(1.) a layer which is suitable as a positive electrode,
(2.) a layer according to any of claims 1 to 11, and
(3.) a layer which is suitable as a negative electrode.

**15.** Use of a layer according to any of claims 1 to 11 for the preparation of or in a rechargeable electrochemical cell, comprising

(1.) a layer which is suitable as a positive electrode,
(2.) a layer according to any of claims 1 to 11, and
(3.) a layer which is suitable as a negative electrode,

**characterized in that** an electrochemically activatable material for the positive electrode layer is selected from among lithium cobalt oxide, lithium nickel oxide, nickel manganese oxide, alone or in mixture or as a multinary compound and/or substituted by magnesium, aluminum or fluorine, and/or wherein said electrochemically activatable material for the electrolyte is selected from among natural salts and minerals of lithium, preferably spodumene, β-eucryptite and petalite, and from among synthetic lithium salts, preferably such containing additional cations selected from cations of the main group and of the subgroup elements, and/or wherein an electrochemically activatable material for the negative electrode layer is selected from among an arbitrarily selected carbon modification, titanium

dioxide, titanium disulfide, tungsten dioxide, molybdenum dioxide, lithium titanate, a lithium-alloyable metal, semiconductor materials, oxides, iodides, sulfides, nitrides or heterogeneous mixtures thereof,
or in the said cell.

**16.** Use as defined in claim 15 or 16, wherein the electrochemical cell is prepared using the subsequent steps:

(a) preparing a self-supporting layer or layer that is placed on a substrate which is electrochemically activatable as defined in any of claims 1 to 11,
(b) laminating suitable ones of such layers into an electrochemically activatable composite layer, and
(c) impregnating the composite layer with the solution of a suitable electrolyte in a plasticizer, whereby the layer to be impregnated does not contain any plasticizer or contains same only in such a low amount that said electrolyte solution penetrates into the layer or into the composite layer, at least partially due to the concentration gradient of the plasticizer.

**17.** Method for producing a self-supporting layer or layer that is placed on a substrate which is suitable as an electrolyte layer for use in electrochemical structural elements, according to any of claims 1 to 11, comprising the following steps:

(a) preparing a self-supporting layer or layer that is placed on a substrate which is electrochemically activatable by solidification of a pasty mass, comprising a heterogeneous mixture of

(1.) a matrix (A) containing or consisting of at least one organic polymer, precursor thereof or prepolymer thereof,
(2.) an inorganic material in the form of a solid substance (B), said material being suitable as a solid body electrolyte and not being soluble in said matrix and in water, and optionally
(3.) a material (C) which is capable of improving the transport of a liquid electrolyte into and the storage thereof within the structural element,

(b) contacting the dried layer with a dissolved solid electrolyte such that said electrolyte penetrates into said layer, whereupon the film is dried at a temperature in the range of room temperature up to about 70-90°C.

**18.** Method according to claim 17, wherein the layer is a flexible film according to claim 11, **characterized in that** in step (a), the heterogeneous mixture is brought into layer form on a substrate and is sheeted out, and the layer thus obtained is dried, whereby the drying is preferably performed at low pressure down to about $10^{-2}$mbar and a temperature between environmental temperature and up to 150°C, especially preferred in the area of 65-80°C, or at environmental pressure at a temperature of up to 200°C, especially preferred in the range of about 120°C.

**19.** Method for producing a self-supporting layer according to claim 17, wherein the dried layer is impregnated with the solution of a suitable electrolyte in a plasticizer, whereby the layer to be impregnated does not contain any plasticizer or only contains such a small quantity of plasticizer that at least partially due to the plasticizer concentration gradient, the electrolyte solution penetrates into the layer or the composite layer.

**20.** Use of a material (C) which has an effect on the transport and/or the storage of a liquid electrolyte or can swell under the influence of the said liquid electrolyte, as a component of a heterogeneous mixture, the mixture comprising a matrix (A) containing or consisting of at least one organic polymer, precursor thereof or prepolymer thereof, and an electrochemically activatable inorganic material in the form of a solid substance (B), said material not being soluble in said matrix and in water, and which is suitable for the preparation of a self-supporting layer or layer that is placed on a substrate as defined in claim 2.

**21.** Use according to claim 20, **characterized in that** the material (C) is selected under pumice powder, zeolites, chamotte, silica gel, fumed silicon dioxide or kieselguhr, or **in that** the material (C) is, at the same time, the inorganic material in the form of a solid substance (B), said material not being soluble in said matrix and in water, or is part thereof.

## Revendications

**1.** Couche autoportante ou reposant sur un substrat, comprenant un mélange hétérogène composé de

(1.) une matrice (A) contenant au moins un polymère organique, ses précurseurs ou ses prépolymères ou constituée des composants mentionnés, ainsi que
(2.) un matériau inorganique électrochimiquement activable, insoluble dans la matrice et dans l'eau, se présentant sous la forme d'une substance solide (B), qui est un matériau approprié en tant qu'électrolyte solide,

**caractérisée en ce qu'**elle contient en outre un deuxième électrolyte, qui a été introduit dans la couche sous forme dissoute.

**2.** Couche autoportante ou reposant sur un substrat selon la revendication 1, dans laquelle le mélange hétérogène comprend en outre un matériau (C), qui possède un effet de transport et/ou de stockage pour un électrolyte liquide ou qui peut gonfler sous l'action de celui-ci.

**3.** Couche autoportante ou reposant sur un substrat selon la revendication 1 ou 2, contenant un plastifiant, qui est choisi parmi les substances répondant à la formule

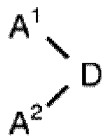

dans laquelle $A^1$ et $A^2$ représentent indépendamment l'un de l'autre $R^1$, $OR^1$, $SR^1$ ou $NHR^1$, ou $A^1$ et $A^2$ forment avec D un hétérocycle 5 et D peut représenter C=O, S=O, C=NH ou $C=CH_2$, et peut par ailleurs représenter aussi 0, S, NH ou $CH_2$ lorsque D forme avec $A^1$ et $A^2$ l'hétérocycle 5 mentionné.

**4.** Couche autoportante ou reposant sur un substrat selon la revendication 3, dans laquelle le plastifiant est choisi parmi le sulfoxyde de diméthyle, le carbonate de diméthyle, le carbonate d'éthylméthyle, le carbonate de diéthyle, le carbonate de méthylpropyle, le carbonate d'éthylène, le sulfite d'éthylène, le carbonate de propylène, le dioxolane, le tétrahydrofurane, la $\gamma$-butyrolactone ou un mélange de ceux-ci.

**5.** Couche autoportante ou reposant sur un substrat selon la revendication 3 ou 4, **caractérisée en ce que** le plastifiant est présent en une quantité de 0,05 à 50 % en poids, de préférence de 5 - 12 % en poids, et de préférence encore d'environ 10 % en poids ou moins, rapportés au matériau électrochimiquement activable.

**6.** Couche autoportante ou reposant sur un substrat selon l'une quelconque des revendications précédentes, **caractérisée en ce que** le polymère organique de la matrice (A) est un polymère capable de gonfler et/ou chloré ou fluoré, de préférence du chlorure de polyvinylidène, de l'oxyde de polyéthylène ou un copolymère de fluorure de polyvinylidène et d'hexafluoropropylène ou un mélange contenant au moins un de ces polymères.

**7.** Couche autoportante ou reposant sur un substrat selon la revendication 2 ou l'une quelconque des revendications qui en dépendent, **caractérisée en ce que** le matériau (C) est choisi parmi la farine de pierre ponce, les zéolithes, la chamotte, le gel de silice, le dioxyde de silicium fumé ou le kieselguhr.

**8.** Couche autoportante ou reposant sur un substrat selon l'une quelconque des revendications précédentes, **caractérisée en ce que** l'on utilise comme deuxième électrolyte au moins un sel de lithium, de préférence choisi parmi le perchlorate, le nitrate, le tétrafluoroborate, l'hexafluorophosphate, le trifluorométhylsulfonate, le tris-(trifluorométhylsulfonyl)-méthyle ou le bis(trifluorométhylsulfonyl)amide.

**9.** Couche autoportante ou reposant sur un substrat selon l'une quelconque des revendications précédentes, dans laquelle le solvant pour l'électrolyte est choisi parmi les solvants qui exercent un effet plastifiant sur la matrice (A).

**10.** Couche autoportante ou reposant sur un substrat selon l'une quelconque des revendications précédentes, **caractérisée en ce que** le deuxième électrolyte a été introduit dans la couche sous forme dissoute dans un plastifiant sur la base d'un gradient de concentration du plastifiant.

**11.** Couche autoportante ou reposant sur un substrat selon l'une quelconque des revendications précédentes, **caractérisée en ce que** la couche est une feuille souple.

**12.** Utilisation d'une couche selon l'une quelconque des revendications 1 à 11 pour la fabrication d'un composite stratifié présentant des propriétés électrochimiques, comprenant

(1.) une couche, qui convient comme électrode positive,
(2.) une couche selon l'une quelconque des revendications 1 à 11, et
(3.) une couche, qui convient comme électrode négative.

**13.** Utilisation selon la revendication 12, **caractérisée en ce que** le mélange hétérogène respectivement prévu pour une couche est mis sous la forme d'une couche autoportante, **en ce que** les couches ainsi produites sont ensuite stratifiées et le composite stratifié résultant est ensuite mis en contact avec un électrolyte solide dissous, de telle manière que celui-ci pénètre dans le composite stratifié, le composite stratifié étant ensuite séché à une température comprise dans une plage allant de la température ambiante à environ 70-90°C.

**14.** Utilisation d'une couche selon l'une quelconque des revendications 1 à 11 pour la fabrication ou dans une cellule électrochimique rechargeable selon la technologie des couches épaisses, comprenant un composite stratifié présentant des propriétés électrochimiques, comprenant:

(1.) une couche, qui convient comme électrode positive,
(2.) une couche selon l'une quelconque des revendications 1 à 11, et
(3.) une couche, qui convient comme électrode négative.

**15.** Utilisation d'une couche selon l'une quelconque des revendications 1 à 11 pour la fabrication ou dans une cellule électrochimique rechargeable comprenant un composite stratifié présentant des propriétés électrochimiques, comprenant:

(1.) une couche, qui convient comme électrode positive,
(2.) une couche selon l'une quelconque des revendications 1 à 11, et
(3.) une couche, qui convient comme électrode négative,

**caractérisée en ce que** le matériau électrochimiquement activable pour l'électrode positive est choisi parmi l'oxyde de cobalt et de lithium, l'oxyde de nickel et de lithium, l'oxyde de manganèse et de nickel, seul ou en mélange ou sous forme de composé multiple et/ou substitué avec du magnésium, de l'aluminium ou du fluor, et/ou dans laquelle le matériau électrochimiquement activable pour l'électrolyte est choisi parmi des sels et des minerais de lithium présents dans la nature, de préférence le spodumène, la β-eucryptite et la pétalite, et des sels de lithium synthétiques, de préférence ceux qui contiennent d'autres cations, choisis parmi ceux des éléments des groupes principaux et des groupes secondaires, et/ou dans laquelle le matériau électrochimiquement activable pour l'électrode négative est choisi parmi une modification du carbone quelconque, le dioxyde de titane, le bisulfure de titane, le dioxyde de tungstène, le dioxyde de molybdène, le titanate de lithium, un métal capable de s'allier au lithium, des matériaux semi-conducteurs, des oxydes, des iodures, des sulfures, des nitrures ou des mélanges hétérogènes de ceux-ci, ou dans cette cellule.

**16.** Utilisation selon la revendication 14 ou 15, dans laquelle la cellule électrochimique est fabriquée à l'aide des étapes suivantes:

(a) fabrication d'une couche électrochimiquement activable autoportante ou reposant sur un substrat, selon l'une quelconque des revendications 1 à 11,
(b) stratification de telles couches appropriées en un composite stratifié électrochimiquement activable, et
(c) imprégnation du composite stratifié avec la solution d'un électrolyte approprié dans un plastifiant, dans laquelle la couche à imprégner ne présente pas ou seulement une quantité tellement faible de plastifiant que la solution d'électrolyte arrive au moins partiellement dans la couche ou dans le composite stratifié sur la base du gradient de concentration du plastifiant.

**17.** Procédé de fabrication d'une couche autoportante ou reposant sur un substrat, convenant comme couche d'électrolyte, à utiliser dans des composants électrochimiques selon l'une quelconque des revendications 1 à 11, comprenant les étapes suivantes:

(a) fabrication d'une couche électrochimiquement activable autoportante ou reposant sur un substrat par solidification d'une matière pâteuse, qui comprend un mélange hétérogène composé de:

(1.) une matrice (A) contenant au moins un polymère organique, ses précurseurs ou ses prépolymères ou constituée des composants mentionnés,
(2.) un matériau inorganique insoluble dans la matrice et dans l'eau, sous la forme d'une substance solide (B), qui convient comme électrolyte solide, et éventuellement
(3.) un matériau (C), qui est capable d'améliorer le transport et le stockage de liquide électrolytique dans le composant,

(b) mise en contact de la couche séchée avec un électrolyte solide dissous, de telle manière que celui-ci pénètre dans la couche, la feuille étant ensuite séchée à une température comprise dans une plage allant de la température ambiante à environ 70-90°C.

**18.** Procédé selon la revendication 17, dans lequel la couche est une feuille souple selon la revendication 11, **caractérisé en ce que**, dans l'étape (a), on dépose le mélange hétérogène sous forme de couche sur un support, on l'étire et on sèche la couche ainsi obtenue, le séchage étant effectué de préférence sous une dépression pouvant atteindre environ $10^{-3}$ mbar et une température comprise entre la température ambiante et 150°C, de préférence comprise dans la plage de 65 à 80°C, ou à la pression atmosphérique à une température allant jusqu'à 200°C, de préférence encore dans la plage allant jusqu'à environ 120°C.

**19.** Procédé de fabrication d'une couche autoportante selon la revendication 17, dans lequel on imprègne la couche séchée avec la solution d'un électrolyte approprié dans un plastifiant, la couche à imprégner ne présentant pas ou seulement une quantité tellement faible de plastifiant que la solution d'électrolyte arrive au moins partiellement dans la couche ou dans le composite stratifié sur la base du gradient de concentration du plastifiant.

**20.** Utilisation d'un matériau (C), qui possède un effet de transport et/ou de stockage pour un électrolyte liquide ou qui peut gonfler sous l'action de celui-ci, comme composant d'un mélange hétérogène, qui contient une matrice (A) contenant au moins un polymère organique, ses précurseurs ou ses prépolymères ou qui est constituée des composants mentionnés, et un matériau inorganique sous la forme d'une substance solide (B), électrochimiquement activable, insoluble dans la matrice et dans l'eau, et qui convient pour la fabrication d'une couche autoportante ou reposant sur un substrat selon la revendication 2.

**21.** Utilisation selon la revendication 20, **caractérisée en ce que** le matériau (C) est choisi parmi la farine de pierre ponce, les zéolithes, la chamotte, le gel de silice, le dioxyde de silicium fumé et le kieselguhr, ou **en ce que** le matériau (C) est en même temps le matériau inorganique, insoluble dans la matrice et dans l'eau, sous la forme d'une substance solide (B) ou une partie de celui-ci.

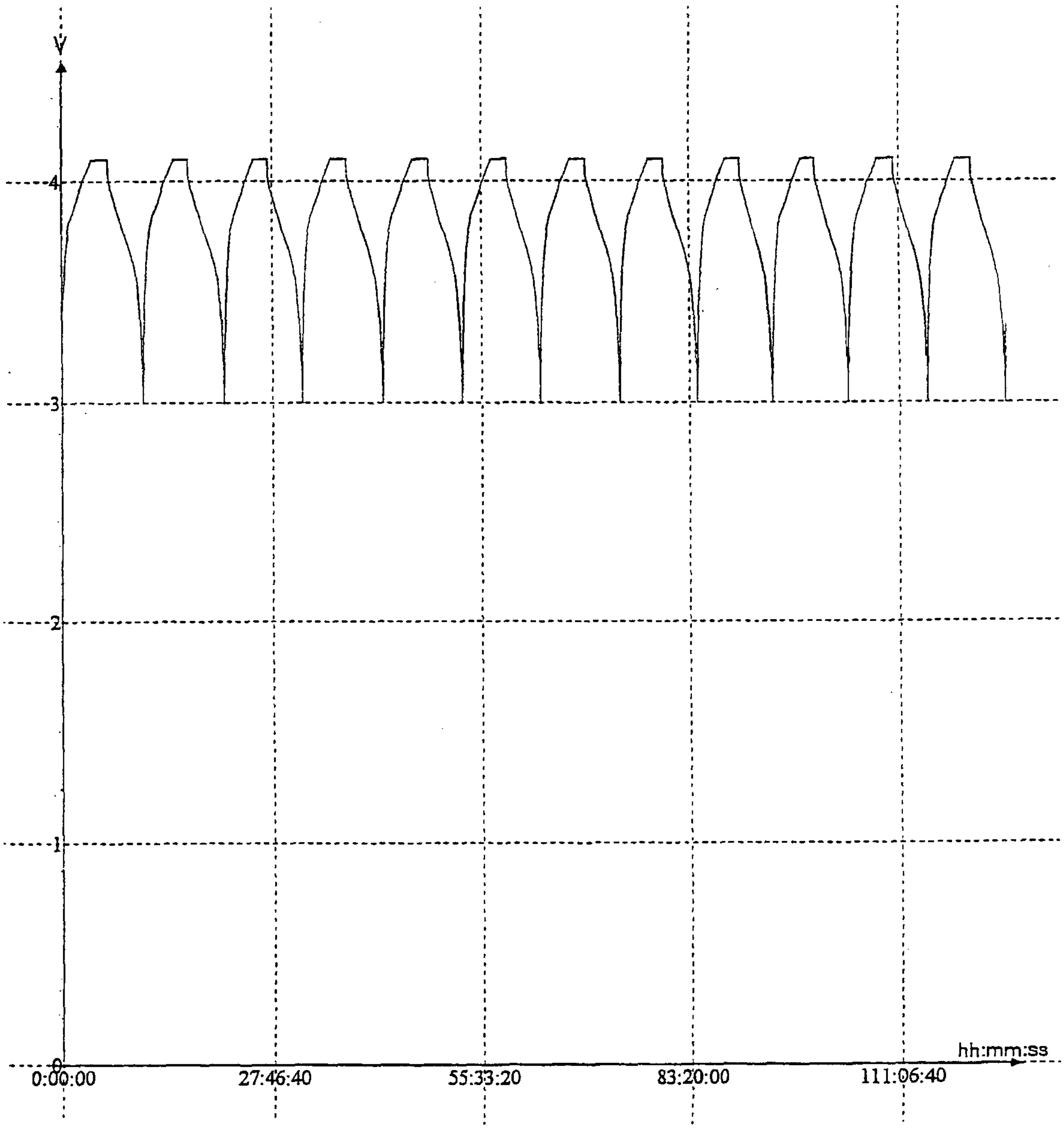


Figur 1

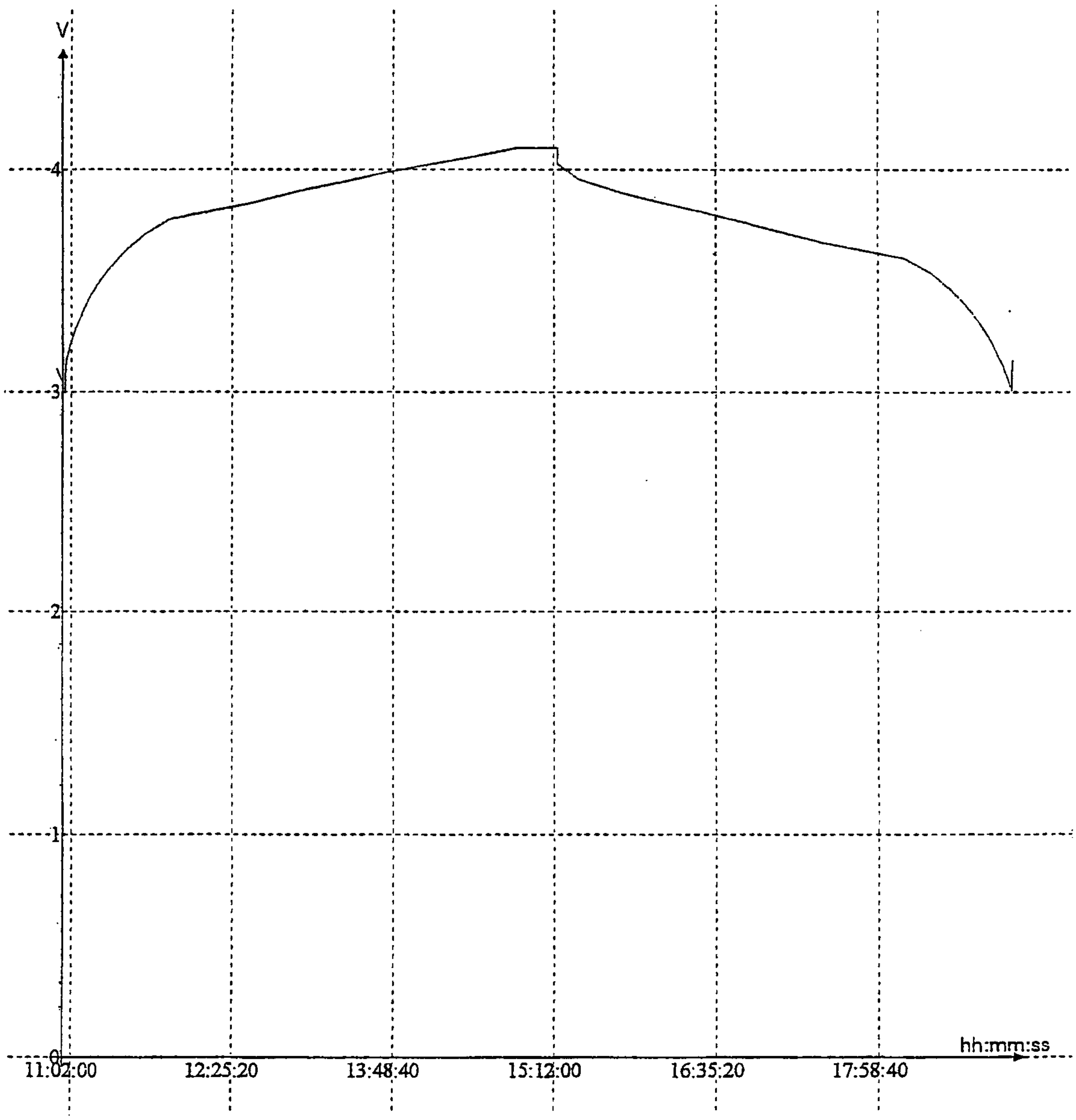


Figur 2a

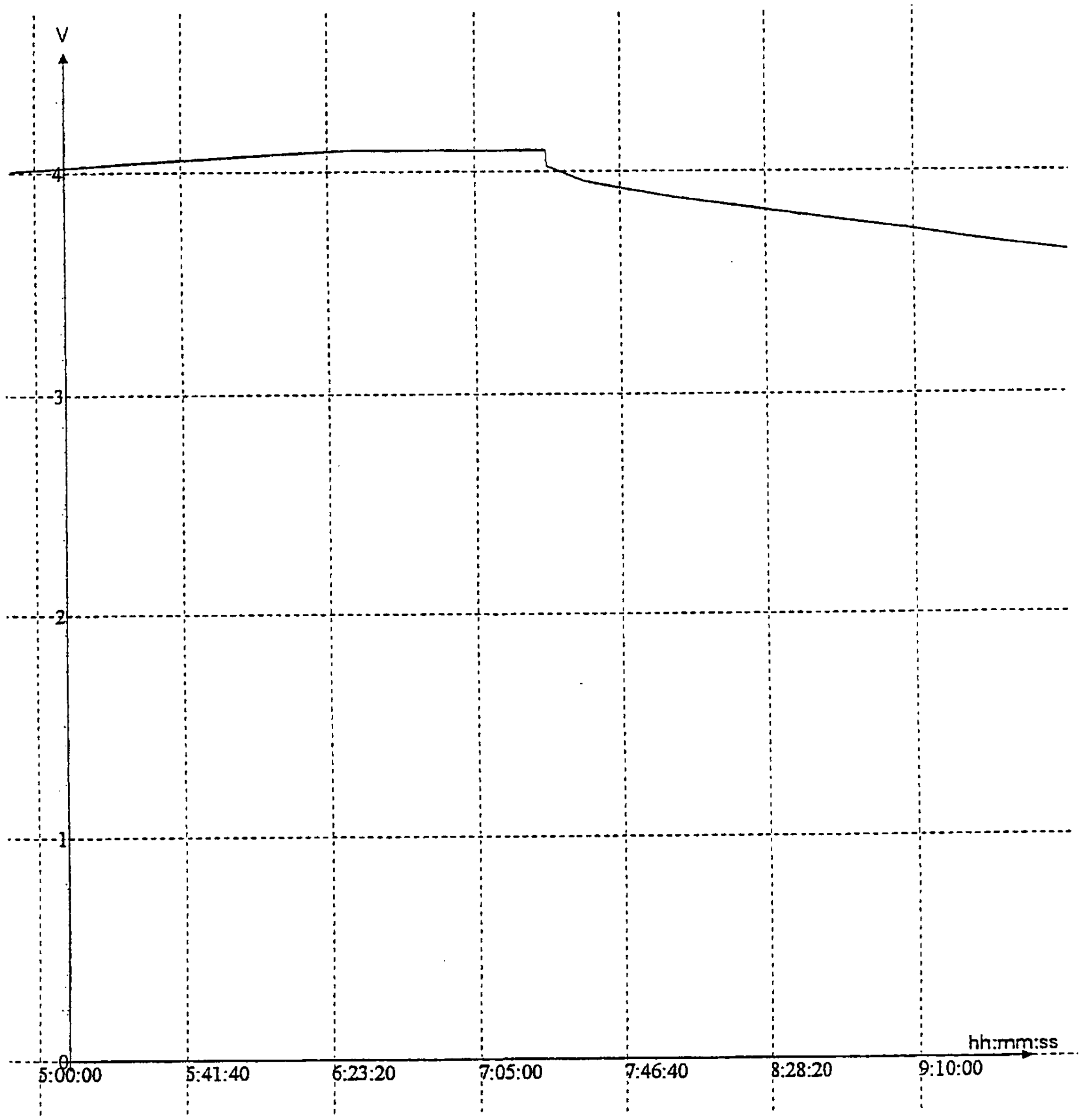


Figur 2b

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- US 5009970 A
- US 5041346 A
- US 5456000 A
- WO 0024068 A
- WO 0013249 A
- WO 0063984 A
- WO 9818173 A
- EP 0557250 A
- WO 9826468 A
- DE 19819752 A1